# FASCICULE DE BREVET EUROPEEN

(11) **EP 0 410 860 B1**
(45) Date de publication et mention de la délivrance du brevet: **05.11.1997**
(21) Numéro de dépôt: 90402106.0
(22) Date de dépôt: 23.07.1990
(51) Int. Cl.: G06F 13/12, H04L 12/42

(54) **Dispositif passerelle de connexion d'un bus d'ordinateur à un réseau fibre optique en forme d'anneau**
Schnittstelle zur Verbindung von einem Rechnerbus mit einem faseroptischen Ringnetzwerk
Interface for connecting a computer bus to a fibre-optic ring network

(30) Priorité: 27.07.1989 FR 8910156
(43) Date de publication de la demande: 30.01.1991
(73) Titulaire: BULL S.A., 78430 Louveciennes (FR)
(72) Inventeur: Takats, Gilbert, F-75116 Paris (FR)
(74) Mandataire: Gouesmel, Daniel

(56) Documents cités:
- EP-A- 0 193 305
- WO-A-84/03192
- US-A- 4 845 609
- EDN ELECTRICAL DESIGN NEWS. vol. 32, no. 22, 29 octobre 1987, NEWTON,
- MASSACHUSETT pages 132 - 134; D.Shear: "Five-chip set eases design of 100M-bps, fiber-optic local-area networks"

## Description

La présente invention telle qu'elle est définie dans les revendications concerne un dispositif passerelle de connexion d'un bus d'ordinateur à un réseau de transmission de données en forme d'anneau, dont le support de transmission est constitué par des fibres optiques, réseau qui est encore appelé "réseau FDDI".

Le document EDN ELECTRICAL DESIGN NEWS, Vol. 32 n° 22, 29 octobre 1987, Newton, Massachusets pf. 132-134, D.SHEAR "Five-chip set easer design of 100 M-bps fiber optic local area network donne un exemple de circuits utilisables dans une interface FDDI.

Les réseaux de transmission de données sont constitués par une pluralité d'unités, généralement appelées "équipement terminal de traitement de données", en abrégé, ETTD, (Data Terminal Equipment, en langue anglaise, en abrégé DTE) ou encore terminaux ou stations, par commodité de langage. Ces terminaux ou stations peuvent être constitués, notamment mais s non exclusivement, par des ordinateurs. Les terminaux communiquent entre eux par l'intermédiaire d'un système de transmission.

Parmi les réseaux de transmission de données les plus couramment utilisés, on relève les réseaux en forme d'anneau (Token Ring Network, en anglais).

Les développements technologiques récents dans le domaine des systèmes de transmission conduisent à utiliser de plus en plus fréquemment les fibres optiques pour transporter les informations sur un réseau de transmission, d'un terminal à un autre. On réalise ainsi des réseaux en forme de boucle dont le support de transmission est constitué par des fibres optiques. De tels réseaux encore appelés réseaux fibre optique, comme par exemple le réseau FDDI, sont définis dans leurs grandes lignes dans les documents élaborés dans des comités de standardisation internationaux comme le Comité X3T9-5 de l'ANSI (American National Standard Institute). Les normes définies dans ces documents par l'ANSI sont en passe d'être adoptées par l'I.S.O, Organisation Internationale de Normalisation (International Standard Organization).

Ces normes définissent par exemple la longueur totale maximale de la fibre sur le réseau, soit 200 kms, la distance maximale entre les stations du réseau les plus éloignées, soit 100 kms, la distance maximum entre stations, soit 2 kms et le nombre maximum de connexions physiques, soit 1000. Elles définissent encore la vitesse et le débit hors ligne, le format des trames qui ne doivent pas comporter plus de 4500 octets d'informations, la nature des signaux constituant les caractères de commande placés en début et en fin de trame et la longueur de chacun des ensembles de signaux suivant leur nature, ainsi que le code dans lequel sont écrites et transmises les informations d'une station à l'autre.

L'un des nombreux avantages de l'utilisation de fibre optique en tant que support de transmission des informations sur un réseau est la valeur élevée des débits obtenus de l'ordre de 100 Mbit/s.

Les dispositions essentielles du fonctionnement d'un réseau FDDI sont rappelées ci-dessous, ce qui facilitera la compréhension de l'invention.

Pour qu'un terminal puisse transmettre des informations sur le réseau en forme d'anneau (on dit encore réseau en forme de boucle), on utilise la méthode d'accès à jetons sur boucle. On établit sur le réseau en forme de boucle une transmission synchrone, la resynchronisation s'effectuant au passage du jeton dans chaque terminal. Ainsi, tous les terminaux sont des terminaux moniteurs.

Les grandes lignes de la méthode d'accès au réseau FDDI sont les suivantes :
a) Lorsque aucun terminal n'a de données à émettre, un jeton circule sur la boucle ;
b) Pour émettre une donnée, un terminal intercepte le premier jeton qu'il reçoit, puis émet à sa place, sous forme de trame de données, tout ou partie des données qu'il a à émettre. Il émet ensuite un nouveau jeton sur la boucle.
c) Des pertes accidentelles du jeton peuvent résulter d'erreurs de transmission, ou de reconfiguration de la boucle.

Pour rétablir la circulation d'un jeton en cas de perte, ou après la mise en service initiale du réseau, le terminal moniteur surveille en permanence soit qu'un autre terminal est en train d'émettre, soit qu'un jeton circule sur la boucle. Si ce n'est plus le cas pendant un certain temps, il rétablit l'état initial de la boucle en émettant un jeton suivi de signaux de bourrage distingables du jeton.
d) Une duplication accidentelle du jeton peut également avoir lieu du fait d'erreurs de transmission. Dans ce cas, le retour à la normale est assuré grâce aux dispositions qui suivent :
- Les trames émises par un terminal portent en tête de trame l'adresse de celui-ci. Ainsi, un terminal déterminé peut-il reconnaître, à la réception, les trames qu'il a émises lui-même.
- Après l'avoir intercepté pour émettre des données, un terminal réémet un jeton tout de suite après avoir émis sa dernière trame.
- Si après un certain temps, qui est l'un des paramètres du réseau, ce début de trame n'est toujours pas reçu, le terminal retourne à l'état transparent sans réémettre de jeton. Dans ce cas, la procédure définie au paragraphe c) ci-dessus s'applique alors.

On sait que la trame est le message individuel. Elle est structurée, comporte un message de début et de fin, des signaux de synchronisation pour en déduire l'horloge, l'adresse de la station à laquelle est destiné le message, l'adresse de la station émettrice, la longueur des données, les données utiles, etc... . En d'autres termes, la trame est le bloc élémentaire d'informations émises par une station ou terminal quelconque, qui transitent sur le support de transmission du réseau. On peut dire, de manière simplifiée, qu'une trame est constituée de données utiles qui sont encadrées, dans le temps, par des signaux placés en tête de trame et par des signaux placés en queue de trame. Les signaux placés en tête et en queue de trame qui encadrent les données utiles sont appelés caractéres de commande.

On sait qu'un ordinateur est constitué d'une unité centrale (Central Processor Unit, en anglais, en abrégé CPU) et de différents organes périphériques, que ce soient des périphériques magnétiques tels que des mémoires à disques ou des périphériques dits d'entrée/sortie permettant l'échange de données avec l'extérieur (terminaux à écran, imprimantes, etc...).

L'unité centrale est formée par au moins un processeur central et une mémoire principale à laquelle ce processeur est relié, et un processeur d'entrée/sortie assurant le contrôle de l'échange des données entre la mémoire et les différents organes périphériques.

L'ensemble des éléments constitutifs fonctionnels constituant l'ordinateur, qu'il s'agisse des processeurs, du processeur central ou des processeurs d'entrée/sortie, des mémoires vives et des mémoires mortes, des contrôleurs d'entrée/sortie ou des contrôleurs de périphériques est disposé sur un ensemble de cartes (boards, en anglais) dont les dimensions sont généralement normalisées. Toute carte est constituée d'un circuit imprimé sur lequel est disposée une pluralité de circuits intégrés.

Ces cartes sont reliées généralement à un même bus de type parallèle qui assure les communications entre les différents processeurs, le transport des données entre les différentes cartes et l'alimentation électrique de celles-ci.

Parmi les bus les plus couramment utilisés dans la pratique actuelle, on trouve le bus communément appelé MULTIBUS II (la marque est déposée par la Société Intel).

Comme son nom l'indique, l'architecture d'un MULTIBUS II est structurée autour d'un bus principal de type parallèle et de bus secondaires. Seul le bus principal est normalisé suivant la norme IEEE 1296 (Institute of Electrical and Electronic Engineers). Ce bus est appelé PSB (ce qui signifie Parallel System Bus).

Lorsque l'on utilise un ordinateur comme station d'un réseau, on le relie à ce dernier par l'intermédiaire d'une interface constituée par une carte spéciale qui est appelée carte hôte ou encore module hôte d'entrée/sortie. Selon la norme IEEE 1296, la carte hôte est connectée au bus PSB par l'intermédiaire d'un coprocesseur par exemple, de type VL 82c 389 (fabriqué par la Société Intel) communiquant par mode message avec les autres éléments constitutifs fonctionnels de l'ordinateur qui communiquent entre eux par le PSB. La gestion du transfert des données vers le réseau est effectuée sous la conduite d'un microprocesseur, les données à transmettre sur le réseau étant acheminées sur le bus de communication interne de ce dernier.

Toutefois, il est clair que les modes de transmission des données, d'une part sur le bus PSB et le bus de communication interne du microprocesseur de la carte hôte, et d'autre part sur le réseau FDDI sont totalement différents, aussi bien en ce qui concerne le débit de transmission des informations, qu'en ce qui concerne les protocoles de transmission utilisés, les codes d'écritures, les informations, le format des caractères de commande, transmission des informations en parallèle sur le bus de communication interne du microprocesseur de la carte hôte, transmission des informations en série sur le réseau FDDI, etc... .

Il faut donc adapter les conditions de transmission des informations sur le bus de communication interne de la carte hôte d'une part, aux conditions de transmission sur le réseau d'autre part.

La présente invention a précisément pour but de réaliser cette adaptation. Elle permet la connexion du bus PSB au réseau FDDI à haut débit. On peut dire également qu'elle réalise le couplage entre le PSB et le réseau FDDI. Le dispositif passerelle selon l'invention est suffisamment rapide et simple pour s'adapter sur n'importe quel type de cartes hôtes, quel que soit le constructeur qui le réalise. On réalise donc un dispositif passerelle universel, simple, ayant de bonnes performances, bon marché et de faible encombrement, permettant de transmettre les informations dans un sens ou dans un autre avec la vitesse la plus grande possible qui reste compatible avec les débits extrêmement élevés de l'anneau du réseau.

Selon l'invention, le dispositif passerelle de connexion d'un bus d'ordinateur à un réseau fibre optique en forme d'anneau, est réalisé tel qu'indiqué par la revendication 1.

D'autres caractéristiques et avantages de la présente invention apparaîtront dans la description suivante donnée à titre d'exemple non limitatif et en se référant aux dessins annexés.

Sur ces dessins :
- la figure 1 composée des figures 1a et 1b, montre comment on relie un ordinateur considéré en tant que terminal de réseau, à un réseau fibre optique par l'intermédiaire du dispositif passerelle de connexion selon l'invention,
- les figures 2 et 3 montrent les différents éléments constitutifs essentiels du dispositif passerelle de connexion selon l'invention, la figure 2 montrant plus spécialement le module hôte d'entrée/sortie ainsi que l'interface de transfert, alors que la figure 3 montre les autres éléments du dispositif passerelle selon l'invention,
- la figure 4 montre la partie de l'interface de transfert utilisée pour transférer les informations contenues dans les blocs de contrôle vers le bus de commande du contrôleur de gestion,
- la figure 5 montre comment est constitué un bloc de contrôle contenant des paramètres relatifs à la constitution des trames FDDI,
- la figure 6 donne l'organigramme de fonctionnement du dispositif passerelle selon l'invention montrant comment sont transférées les informations du réseau vers le module hôte,
- la figure 7 donne l'organigramme du fonctionnement du dispositif selon l'invention montrant comment sont transférées les informations du module hôte vers le réseau.

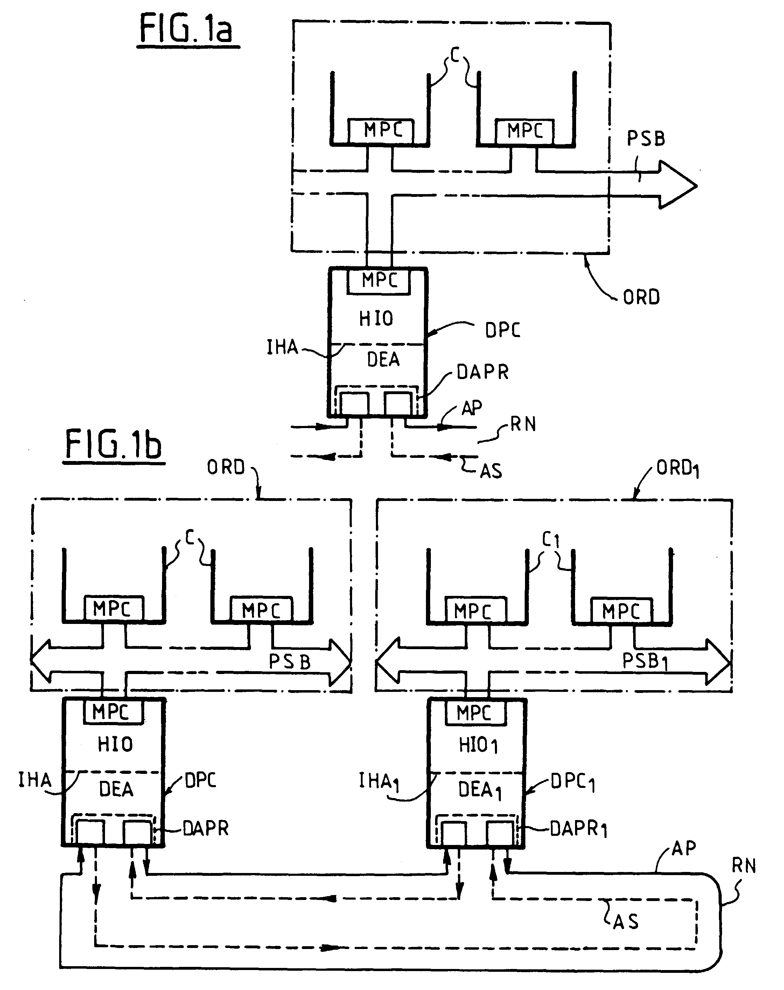

On considère les figures 1a et 1b.

La figure 1a montre un ordinateur ORD dont les différents éléments constitutifs sont disposés sur une pluralité de cartes C communiquant entre elles par l'intermédiaire d'un bus système parallèle PSB de type MULTIBUS II. Chacune des cartes C est connectée au bus PSB par l'intermédiaire d'un coprocesseur MPC fabriqué, ainsi qu'il a été dit plus haut, par exemple par la Société Intel. Le transfert des informations des cartes vers le MULTIBUS II s'effectue par un système connu sous le nom de mode message. Le mode de communication entre les différentes cartes de l'ordinateur ORD, par mode message émis par les coprocesseurs MPC, est défini de manière précise dans la norme précitée IEEE 1296.

L'ordinateur ORD est connecté à un réseau RN, en forme d'anneau, par l'intermédiaire du dispositif passerelle de connexion DPC selon l'invention. Le réseau RN utilise comme support de transmission des fibres optiques et est composé par exemple, d'un anneau principal AP et d'un anneau secondaire AS.

Le dispositif passerelle de connexion DPC selon l'invention se compose d'une part d'un module hôte d'entrée/sortie HIO, d'un dispositif adaptateur DEA et d'une interface IHA assurant le transfert des informations entre le module hôte HIO et le dispositif adaptateur DEA.

Le module hôte HIO est relié au bus PSB par un coprocesseur MPC, du même type que les coprocesseurs des cartes C de l'ordinateur ORD. Le module hôte HIO et le coprocesseur MPC sont disposés sur une carte dont la constitution physique est analogue à celle des cartes C.

Le dispositif passerelle de connexion est relié physiquement au réseau RN par l'intermédiaire d'un dispositif d'accès physique au réseau, à savoir DAPR, appartenant au dispositif adaptateur DEA.

La figure 1b montre un exemple de réseau RN en forme d'anneau, auquel sont connectés l'ordinateur ORD de la figure 1a par l'intermédiaire du dispositif passerelle de connexion DPC, et un second ordinateur ORD₁ par l'intermédiaire d'un dispositif passerelle de connexion DPC₁. L'ordinateur ORD₁ présente, par exemple, un structure analogue à celle de l'ordinateur ORD et est par conséquent formé d'une pluralité de cartes C₁ reliées entre elles à un même bus PSB₁ de type MULTIBUS II, par l'intermédiaire de coprocesseurs MPC. Le dispositif passerelle de connexion DPC₁ a une structure identique à celle du dispositif DPC et est donc constitué d'un module hôte HIO₁, d'un dispositif adaptateur DEA₁, et d'une interface de transfert IHA₁. Le module hôte HIO₁ est raccordé au bus PSB₁, par l'intermédiaire d'un coprocesseur MPC, alors que le dispositif adaptateur DEA₁ est relié physiquement au réseau RN par l'intermédiaire d'un dispositif d'accès physique au réseau DAPR₁.

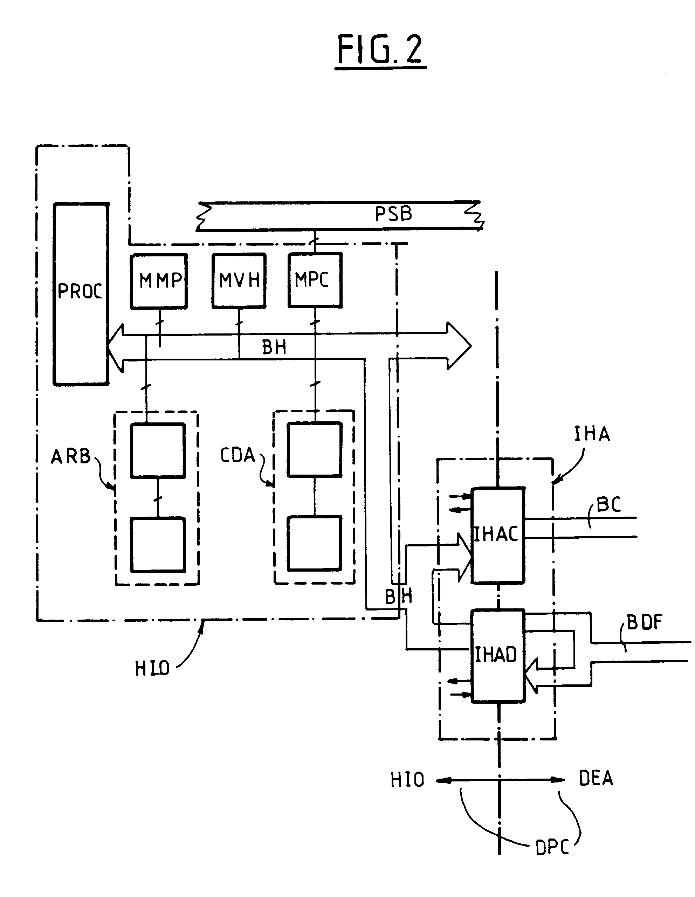

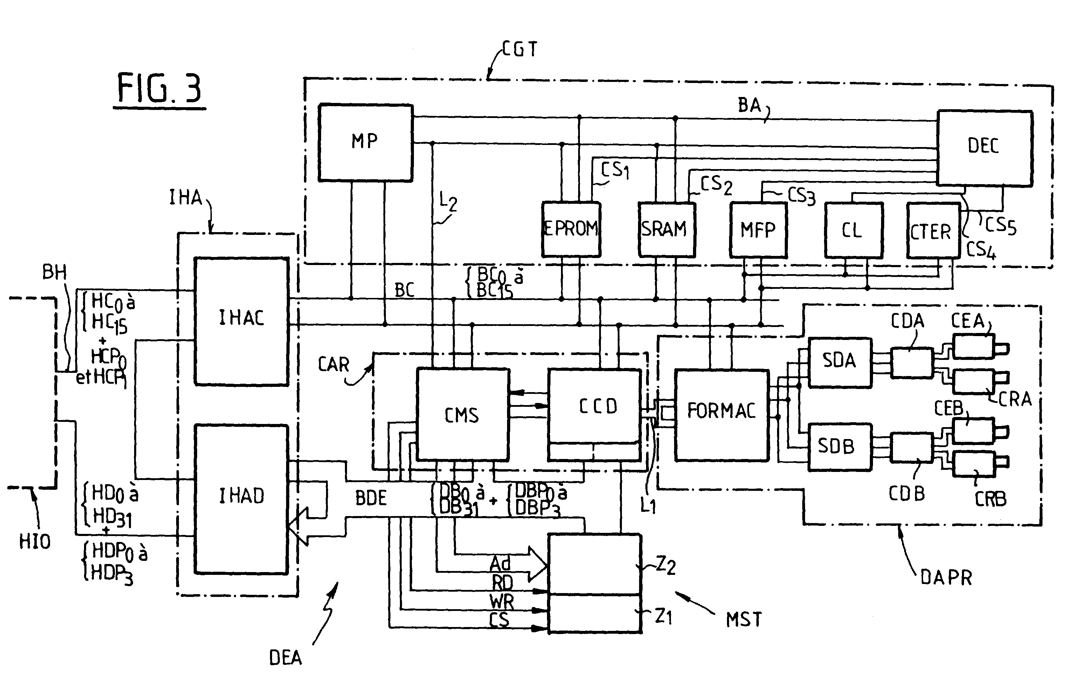

Les différents éléments constitutifs essentiels du dispositif passerelle de connexion DPC selon l'invention apparaissent plus en détails aux figures 2 et 3.

Ce sont :
- le module hôte HIO précité, construit autour d'un microprocesseur PROC, de type 68020 fabriqué par la firme MOTOROLA, et d'un bus BH associé à ce microprocesseur,
- l'interface de transfert IHA connectée au module hôte HIO par l'intermédiaire du bus BH. Cette interface de transfert se compose d'une interface IHAD permettant de transférer les données depuis ou vers le module hôte HIO, et d'une interface de transfert des blocs de contrôle, à savoir IHAC permettant de transférer les blocs de contrôle depuis ou vers le module hôte HIO,
- le contrôleur CGT de gestion de transfert, construit autour d'un microprocesseur MP, par exemple de type 68010 fabriqué par la firme MOTOROLA, et d'un bus de commande BC associé à ce dernier. Le bus BC est connecté à la sortie de l'interface de commande IHAC de l'interface de tranfert IHA,
- un bus BDF pour transférer les données à haut débit (de l'ordre de 200 Mbit/s) depuis ou vers l'interface de données IHAD de l'interface de transfert IHA,
- le contrôleur CAR d'accès au réseau qui est connecté au bus de données à haut débit BDF et au dispositif d'accès physique DAPR,
- la mémoire MST pour stocker les trames FDDI en vue de l'émission et de la réception de celles-ci vers le réseau ou vers l'ordinateur ORD, avant que celles-ci n'aient lieu. La mémoire MST est connectée au bus haut débit BDF, ainsi qu'au contrôleur d'accès CAR,
- le dispositif d'accès physique au réseau DAPR, précédemment mentionné.

Le contrôleur CGT, le contrôleur CAR, le bus BDF, la mémoire MST et le dispositif DAPR forment le dispositif adaptateur DEA.

Les grandes lignes du fonctionnement du dispositif passerelle de connexion DPC selon l'invention sont les suivantes :

on suppose tout d'abord que l'on cherche à envoyer des informations provenant de l'ordinateur ORD vers le réseau RN, via le bus PSB.

Ces informations qui sont transmises par le coprocesseur MPC sont d'abord mémorisées, puis analysées par le microprocesseur PROC qui élabore alors un bloc de contrôle SCB contenant des paramètres relatifs à la constitution des trames FDDI qui passeront sur le réseau RN, et à la nature des opérations à effectuer par le dispositif adaptateur DEA sous la conduite de son contrôleur de gestion CGT (des exemples de différentes opérations pouvant être effectuées par le dispositif DEA seront détaillés plus loin). Les paramètres relatifs à la constitution des trames FDDI sont par exemple l'adresse du destinataire des informations, l'adresse de l'expéditeur, la longueur des messages qui sont envoyés, etc...

Dès que le microprocesseur PROC a constitué le bloc de contrôle SCB, il envoie ce dernier, ainsi que les données correspondantes sur le bus BH vers l'interface IHA. Le bloc de contrôle SCB est acheminé par le bus BH, plus précisément vers l'interface de commande IHAC. Dans une forme de réalisation préférée de l'invention, le bloc de contrôle SCB est acheminé sur 16 bits, à savoir HC₀ à HC₁₅, accompagné de 2 bits de parité HCP₀ et HCP₁. Quant aux données, elles sont acheminées sur 32 bits, à savoir HD₀ à HD₃₁, accompagnées de 4 bits de parité HDP₀ à HDP₃. Ces données sont envoyées sur l'interface de données IHAD appartenant à l'interface de tranfert IHA.

Aussi bien les données que le bloc de commande SCB sont stockés provisoirement dans leurs interfaces IHAC et IHAD avant d'être transférés sur les bus BC d'une part et BDF d'autre part.

Il convient de préciser que le bloc de contrôle SCB peut être transféré sur le bus BC avant, en même temps, ou après que les données aient été transférées sur le bus BDF. Ainsi, le transfert des blocs de contrôle et des données sur les deux bus séparés BC et BDF s'effectue indépendamment pour l'un et pour l'autre. On dit qu'il y a parallélisation du transfert des blocs de contrôle et des données.

Lorsque le contrôleur d'accès CAR au réseau en donne l'autorisation, les données sont transférées de l'interface IHA à la mémoire MST où elles sont stockées, en attendant d'être envoyées sur le réseau RN. Elles ne peuvent être envoyées sur ce réseau que si le contrôleur de gestion CGT a élaboré les caractères de commande qui sont placés en tête et en fin de trames FDDI. Il convient de noter qu'un message déterminé envoyé par l'ordinateur ORD sur le réseau RN a une longueur variable. Le contrôleur de gestion détermine le nombre de trames FDDI qu'il faut constituer pour que ce message soit envoyé dans sa totalité sur le réseau. En effet, selon la norme ANSI précitée, la longueur d'une trame FDDI ne peut excéder 4500 octets. Il est donc clair que si le message envoyé par l'ordinateur ORD a une longueur supérieure à 4500 octets, le nombre de trames correspondant à ce message est supérieur ou égal à 2.

Le bloc de contrôle SCB correspondant aux données transmises sur le bus BDF est envoyé au processeur MP via le bus BC. Le microprocesseur analyse les informations contenues dans ce bloc, les interprète, détermine l'opération à effectuer sous le contrôle du contrôleur CGT, détermine le nombre de trames FDDI correspondant aux messages envoyés par l'ordinateur ORD.

Le processeur MP élabore ensuite les caractères de commande de début et de fin des trames FDDI correspondant aux messages indiqués ci-dessus.

Dès que le microprocesseur MP a terminé son analyse et son interprétation du bloc de contrôle SCB, il transmet alors, via le contrôleur d'accès CAR, les caractères de commande à la mémoire MST où ils sont stockés, en attendant que le contrôleur d'accès CAR autorise le transfert des trames FDDI vers le réseau RN, à travers le dispositif d'accès DAPR.

On voit que le bus de données à haut débit BDF a trois accès possibles, à savoir :
- Un accès depuis le contrôleur d'accès CAR. Cet accès s'effectue selon le mode DMA (accès direct mémoire, ou encore direct memory access en anglais).
- Un accès depuis le processeur MP via le contrôleur d'accès CAR par un système d'instructions, pour transmettre les caractères de commande élaborés par celui-ci, vers la mémoire MST.
- Un accès depuis le module hôte par l'intermédiaire de l'interface de transfert IHA, selon le mode DMA.

Suivant le type d'accès qui est recherché, le contrôleur d'accès CAR donne ou non l'autorisation d'accès au bus BDF, sachant que chacun des trois accès possibles a une priorité différente, la priorité la plus haute étant accordée au contrôleur d'accès lui-même (c'est-à-dire au transfert d'informations depuis le réseau RN), la priorité la plus basse étant réservée à l'accès au module hôte HIO.

Lorsque les trames FDDI stockées dans la mémoire MST sont complètes, elles sont alors transférées, sous le contrôle du contrôleur d'accès CAR, via le dispositif DAPR au réseau RN. Le dispositif DAPR sérialise les trames, code celles-ci et les met en forme pour qu'elles puissent être transférées sur le réseau.

On considère maintenant le cas du transfert d'un message provenant d'une autre station que l'ordinateur ORD, par exemple l'ordinateur ORD₁ de la figure 1b, qui est transmis par le réseau RN. Ce message parvient au dispositif d'accès DAPR. Il est remis en forme et décodé par celui-ci. Ce message qui est transmis sur le réseau RN en série, est désérialisé par le dispositif DAPR et mis sous forme parallèle, 8 bits, avant d'être transmis au contrôleur d'accès CAR. L'ensemble des fonctions et des éléments composant le dispositif DAPR est décrit dans la norme ANSI précitée.

Le contrôleur d'accès CAR transforme le message provenant du dispositif d'accès sur 8 bits en parallèle en un message 32 bits en parallèle, lequel est transmis, par l'intermédiaire du bus BDF à la mémoire de stockage MST.

Le microprocesseur MP du contrôleur CGT va alors chercher dans la mémoire de stockage MST, via le contrôleur d'accès CAR, les caractères de commande de début et de fin de trame. Il les analyse et les interprète, et constitue en fonction de cette analyse et de cette interprétation, un bloc de contrôle SCB qu'il envoie via le bus BC à l'interface de commande IHAC.

Pendant ce temps, les données correspondantes de la trame FDDI sont extraites de la mémoire de stockage MST et transmises par le bus BDF, sous le contrôle du contrôleur d'accès CAR, à l'interface de données IHAD.

Le bloc de contrôle SCB peut être transmis à l'interface IHAC, avant, pendant, après que les données soient transmises par le bus BDF à l'interface IHAD.

Le bloc de contrôle SCB et les données correspondantes sont transmis respectivement par les interfaces IHAC et IHAD au microprocesseur PROC, via le bus BH, avant que ce dernier ne transmette les données, accompagnées du protocole de transmission propre à l'ordinateur ORD et au MULTIBUS II, à l'ordinateur ORD via le coprocesseur MPC et le bus PSB.

L'interface IHA transmet le bloc de contrôle SCB, et les données correspondantes aussi bien à l'émission et à la réception, de manière à rendre totalement asynchrone le module hôte HIO d'une part, et le dispositif adaptateur DEA d'autre part. Par ailleurs, l'interface IHA est totalement transparente, du point de vue de la transmission des informations vers la mémoire de stockage MST, car son cycle de remplissage et de transfert des données vers celle-ci ou depuis celle-ci est contenu à l'intérieur des cycles de remplissage de la mémoire de stockage MST.

On examine désormais plus en détail chacun des éléments constitutifs essentiels du dispositif passerelle de connexion DPC selon l'invention.

On décrira successivement plus en détail, le module hôte HIO, le dispositif d'accès DAPR, le contrôleur de gestion de transfert CGT, le contrôleur d'accès au réseau CAR, la mémoire de stockage MST. On examinera ensuite l'organigramme détaillé du transfert des informations du dispositif adaptateur vers le module hôte d'une part, et du module hôte vers le dispositif adaptateur, d'autre part.

On considère à nouveau la figure 2 qui montre le détail de constitution du module hôte HIO.

Ainsi qu'il à été dit plus haut, le module hôte HIO est bâti autour du microprocesseur PROC du bus BH et assure l'interface du dispositif passerelle de connexion DPC avec le bus PSB de type MULTIBUS II de l'ordinateur ORD.

Le module hôte comprend :
- la mémoire morte programmable MMP, -la mémoire vive MVH, - le coprocesseur, déjà cité, MPC, - le dispositif d'arbitrage ARB, - le contrôleur CDA, d'accès direct mémoire DMA à la mémoire vive MVH.

Ainsi qu'il a été dit plus haut le microprocesseur PROC est un microprocesseur 68020 de la firme MOTOROLA. Sa fréquence d'horloge peut varier entre 10 MHz et 20 à 25 MHz. Les éléments qui constituent le module hôte HIO, forment l'environnement classique d'un microprocesseur de type 68020.

La mémoire morte programmable MMP contient le programme de constitution des blocs de contrôle SCB. Ce programme interprète et analyse les caractères de commande qui se situent en début et en fin des messages envoyés par l'ordinateur ORD via le bus PSB, et constitue en fonction de cette analyse et de cette interprétation les informations contenues dans le bloc de contrôle SCB qui est envoyé au microprocesseur MP du contrôleur CGT via le bus BH et l'interface lHAC.

La mémoire vive MVH, dont la capacité est de l'ordre de quelques millions d'octets (entre 1 et 4 de préférence) peut contenir toutes les données envoyées par l'ordinateur ORD, avant que celles-ci ne soient transmises, sous la conduite du microprocesseur PRUC, vers l'interface IHAD via le bus BH. (Dans l'autre sens de transmission, elle stocke les données provenant du dispositif adaptateur avant envoi sur le bus PSB).

Le contrôleur CDA contrôle l'accès en mode DMA à la mémoire MVH. Ce contrôleur comprend au moins deux canaux de type DMA, l'un pour l'émission de données, l'autre pour la réception,
- le dispositif d'arbitrage ARB arbitre l'accès au bus BH. Il y a trois accès possibles pour ce bus :
   a) un accès pour la mémoire vive MVH par le mode DMA, en provenance au bus PSB, via le coprocesseur MPC. Cet accès bénéficie de la priorité la plus élevée pour le module hôte HIO,
   b) un accès pour le dispositif adaptateur DEA,
   c) un accès pour le microprocesseur PROC.
- Le transfert des informations sur le bus BH, aussi bien pour le bloc de contrôle SCB que pour les données, s'effectue en mode rafale (burst mode en anglais). It convient de mentionner que le bus BH peut être remplacé par deux bus séparés, l'un pour transférer les blocs de contrôle SCB dans IHAC, l'autre pour transférer les données dans IHAD.

On se reporte désormais à la figure 3 et on considère le dispositif d'accès physique au réseau, DAPR.

Ce dernier comprend :
- une première paire de coupleurs optoélectroniques pour l'émission et pour la réception, à savoir CEA-CRA, et une seconde paire de coupleurs octoélectroniques CEB-CRB, la première assurant le couplage physique du dispositif adaptateur DEA à l'anneau principal AP du réseau RN, et la seconde paire assurant le couplage physique du dispositif adaptateur à l'anneau secondaire AS du réseau RN. Ces coupleurs octoélectroniques sont, par exemple, fabriqués par la Société ATT (American Telephone Telegraph) sous la référence 1256B pour l'émission et sous la référence 1356B pour la réception ;
- les codeurs-décodeurs CDA et CDB, pour l'anneau principal et l'anneau secondaire AP et AS, et les sérialisateurs-désérialisateurs, SDA et SDB pour les anneaux principal et secondaire respectivement. Les deux ensembles formés par respectivement CDA et SDA, et CDB et SBD sont identiques et par exemple fabriqués par la Société AMD, sous la référence Am7984A-Am7985A ;
- le contrôleur d'accès à l'anneau FORMAC lequel est fabriqué, par exemple, par la Société AMD précitée, sous la référence 79c83.

En réception, le coupleur CEA transmet chaque trame FDDI au codeur-décodeur CDA qui décode les informations contenues dans la trame et les transmet dans le code propre à l'ordinateur ORD, après avoir récupéré l'horloge, au sérialisateur-désérialisateur SDA qui les transmet à l'élément FORMAC en parallèle, sous 11 bits dans l'exemple de réalisation donné ici. L'élément FORMAC récupère le jeton et le transmet via le bus de commande BC au contrôleur de gestion CGT, lequel va analyser ce jeton et déterminer si celui-ci comporte ou non une erreur. Par ailleurs, les données de la trame, ainsi que les caractères de commande de début et de fin de trame sont transmis en parallèle sur 8 bits au contrôleur d'accès CAR, lequel les transmet à son tour, via le bus de données haut débit BDF, à la mémoire de stockage MST.

Il est rappelé que le rôle que chacun des éléments constituant le dispositif DAPR, et la fonction que celui-ci exerce sont décrits en détail dans la norme ANSI précitée.

On considère désormais le contrôleur de gestion de transfert CGT.

Celui-ci est bâti, ainsi qu'il a été dit plus haut, autour du microprocesseur MP de type 68010 de MOTOROLA et du bus de commande BC sur 16 bits à savoir BC₀ à BC₁₅.

Le contrôleur CGT comprend :
- Le processeur MP précité qui possède un bus d'adresse BA. De préférence, le bus de commande BC est constitué par le bus interne du microprocesseur MP.
- La mémoire morte programmable EPROM,
- La mémoire statique SRAM,
- Le contrôleur d'interruption MFP,
- Le circuit d'horloge CL,
- Le contrôleur CTER de la taille des trames à l'émission et à la réception,
- Le décodeur DEC qui permet au microprocesseur MP d'adresser chacun des éléments EPROM, SRAM, MFP, CL, CTER.

La mémoire morte EPROM, la mémoire statique SRAM, le contrôleur d'interruption MFP, le circuit d'horloge CL, le contrôleur de taille d'émission et réception CTER, sont connectés chacun au bus de commande BC. Par ailleurs, la mémoire morte EPROM et la mémoire statique SRAM sont connectées au bus d'adresse BA du microprocesseur MP (dans l'exemple de réalisation décrit ici, la connexion de ces deux éléments au bus d'adresse BA s'effectue sur 16 bits). En outre, le décodeur DEC est connecté d'une part au bus d'adresse BA et d'autre part, par l'intermédiaire des 5 lignes CS₁ à CS₅ aux éléments EPROM, SRAM, MFP, CL, CTER.

La mémoire programmable EPROM a une capacité de 128 kilo octets, dans l'exemple de réalisation décrit ici, mais elle peut être construite sous la forme de plusieurs modules de la même capacité, suivant le nombre de programmes qu'on veut y inscrire. Cette mémoire comprend, entre autre, le programme de constitution et d'interprétation des blocs de contrôle SCB et de constitution des trames FDDI. Si les messages que transmet l'ordinateur ORD ont une longueur supérieure à 4500 octets, le programme contenu dans la mémoire programmable découpe ce message en plusieurs trames FDDI dont la longueur est égale ou inférieure à 4500 octets.

Par ailleurs, cette mémoire programmable comprend tous les programmes des différentes opérations que peut exécuter le dispositif adaptateur DEA sous la conduite du contrôleur CGT. Parmi ces opérations, on compte bien entendu, le transfert des trames FDDI vers le réseau, le transfert des trames de la mémoire de stockage MST vers le module hôte HIO, les autotests de la carte portant le dispositif DEA, la maintenance, les statistiques, etc... .

La programmation du contrôleur d'accès CAR afin que celui-ci pilote les accès aux différents secteurs de la mémoire, que les informations proviennent du réseau RN, du contrôleur de gestion de transfert CGT et du module hôte HIO est effectuée par le microprocesseur MP. Parmi les différentes opérations à effectuer on compte également, des statistiques sur la réception et l'émission des trames, sur le nombre des trames correctes, sur le nombre des trames en erreur, des programmes de réémission de trames lorsque l'une d'entre elles est en erreur, des programmes de réémission de jetons sur le réseau RN lorsque, selon la norme IEEE précitée, le jeton soit a été perdu, soit a mis trop de temps à circuler sur l'anneau constituant le réseau. Dans l'exemple de réalisation décrit ici, il y a 23 opérations réalisables par le dispositif adaptateur, c'est-à-dire 23 programmes écrits dans la mémoire EPROM. Par conséquent, il y a 23 interruptions possibles pour le microprocesseur dont le travail consiste donc essentiellement à traiter chacune de ces interruptions, en traitant pour chacune d'entre elles, l'un de ces 23 programmes qu'il doit alors exécuter.

La mémoire statique SRAM est réalisée sous forme d'au moins un module de 64 kilo octets. Le microprocesseur MP accède directement à cette mémoire. On inscrit dans celle-ci les informations contenues dans les registres du microprocesseur lorsque celui-ci traite une interruption prioritaire par rapport au programme qui était en cours d'exécution par ce dernier. Les informations qui étaient alors contenues dans les registres du microprocesseur sont transférées dans la mémoire SRAM et y sont ainsi sauvegardées.

Le contrôleur d'interruption MFP, qui est par exemple un contrôleur de type 68901 fabriqué la Société MOTOROLA, permet d'aider le microprocesseur 68010 à traiter les 23 interruptions exigées. En effet, le microprocesseur de type 68010, en propre, ne peut en traiter que 7, par construction. Il est clair que si le microprocesseur MP est constitué par un microprocesseur de type plus puissant que le 68010, pouvant traiter davantage d'interruptions, on peut se passer d'un contrôleur d'interruptions tel que MFP.

Le circuit d'horloge CL (timer, en anglais) est, dans l'exemple de réalisation décrit ici, constitué par un ensemble de modules identiques de type Am9513 de la Société AMD. Dans l'exemple de réalisation décrit ici, trois d'entre eux sont des compteurs et effectuent des statistiques. Ainsi, grâce à ceux-ci, on peut mémoriser ce qui se passe sur le réseau, à savoir, compter le nombre de trames FDDI en circulation, le nombre de trames perdues, le nombre de trames en erreur. Grâce à ces compteurs, on peut donc effectuer des statistiques. Ces compteurs sont programmables par le microprocesseur MP, les programmes étant de ceux contenus dans le mémoire statique SRAM.

D'autres modules Am 9513 constitutifs du circuit d'horloge CL, ont réellement une fonction d'horloge, par exemple pour aller lire des informations de manière cyclique, c'est-à-dire par exemple, aller relever le contenu des trois compteurs précités de manière régulière dans le temps.

D'autres modules Am 9513 sont programmés en horloge pour vérifier le temps de rotation du jeton sur l'anneau constituant le réseau RN : cela permet de constater soit qu'un jeton s'est perdu, soit que les stations gardent le jeton trop longtemps : dans ce cas, le microprocesseur programme l'élément FORMAC du dispositif d'accès physique DAPR, pour que celui-ci émette un nouveau jeton.

Le compteur de la taille des trames à l'émission et à la réception CTER compte le nombre d'octets des trames qui circulent sur le bus haute vitesse BDF car le contrôleur d'accès CAR ne comporte pas de compteur.

Dès que ce contrôleur CTER a compté tous les octets d'une trame (que celle-ci ait une longueur égale à 4500 octets ou moins, sa longueur étant de toute façon connue par le processeur MP, puisque celui-ci effectue le découpage des messages en plusieurs trames), on interrompt la transmission de données sur le bus haut débit BDF.

A l'émission, lorsque le second microprocesseur MP reçoit du premier microprocesseur un bloc de contrôle SCB via l'interface de commande IHAC, il trouve dans ce bloc, la taille (en octets) de la trame à transférer. Il va alors charger celle-ci dans le compteur CTER (il y a en fait, physiquement, deux compteurs, un pour l'emission, l'autre pour la réception). Lorsque les données correspondantes de la trame sont transférées, le contrôleur d'accès CAR (par le biais de son canal DMA réservé à l'émission de données sur le bus BDF, voir détails ci-dessous relatifs à la description de CAR) envoie un signal à CTER, à chaque transmission d'un octet, ce qui fait décompter CTER, d'une unité. Lorsque son contenu est égal à zéro, il envoie une interruption au second microprocesseur MP lequel sait que le transfert est terminé et est donc libre pour une autre tâche.

Il en va de même en réception. Le premier microprocesseur trouve une taille de transfert dans le bloc de contrôle SCB qu'il lit dans l'interface IHAC. Il en informe alors le second microprocesseur MP qui charge alors la taille de la trame à transférer dans le compteur CTER qui décompte d'une unité chaque fois qu'un octet est transféré de la mémoire MST vers l'interface IHAD (sous le contrôle du canal DMA correspondant du contrôleur CAR). Lorsque son contenu est égal à zéro, il envoie une interruption au microprocesseur MP qui sait alors que le transfert est terminé.

Le décodeur DEC permet d'adresser individuellement chacun des éléments constituant le contrôleur CGT, en dehors du microprocesseur MP, et ce, sous le contrôle de ce dernier. Chaque fois que le microprocesseur a besoin d'adresser l'un de ces éléments, il envoie une adresse par l'intermédiaire du bus BA au décodeur DEC, lequel adresse alors l'élément considéré par un signal envoyé sur l'une des lignes CS₁ à CS₅.

On considère désormais le contrôleur d'accès CAR dont les éléments constitutifs essentiels sont :
- le contrôleur de chemin de données CCD,
- le contrôleur de la mémoire de stockage CMS.

Le contrôleur de chemin de données CCD est, dans l'exemple de réalisation décrit ici, constitué par un élément Am 79c82 du constructeur AMD. Il est relié d'une part par la liaison sur 8 bits L₁ à l'élément FORMAC du dispositif d'accès DAPR, et d'autre part connecté au bus haut débit BDF. Il est également relié au contrôleur de la mémoire de stockage CMS.

Le contrôleur de chemin de données CCD fait, en cas d'émission, la demande d'accès au réseau RN. Lorsque cet accès est accordé, il connecte ainsi la mémoire MST au réseau via le dispositif DAPR. Par ailleurs, ce même contrôleur CCD, à la réception reçoit les trames FDDI provenant du réseau RN via DAPR sur 8 bits par la ligne L₁ et envoie ces données sur 32 bits à la mémoire de stockage MST, via le bus BDF. A l'émission, le contrôleur CDD reçoit, via le bus BDF, les trames provenant de la mémoire de stockage MST, sur 32 bits et les renvoie sur 8 bits, par la ligne L₁ au dispositif d'accès DAPR, qui les transmet sur le réseau RN.

Le contrôleur CMS est, dans l'exemple de réalisation décrit ici, constitué par un élément Am 79c81 du constructeur AMD.

Le contrôleur CMS est relié au bus de commande BC, et au bus haut débit BDF. Par ailleurs, il est connecté par l'intermédiaire de la liaison L₂ sur 4 bits au bus d'adresse BA du contrôleur CGT. Par ailleurs, le contrôleur CMS est relié à la mémoire de stockage MST par l'intermédiaire d'un bus d'adresse Ad sur 16 bits, d'une ligne de commande de lecture RD, d'une ligne de commande d'écriture WR et d'une ligne de sélection de blocs mémoire CS. Il est également connecté au contrôleur CCD. Cette connexion permet au contrôleur CCD de demander l'accès au bus haut débit BDF pour transférer d'urgence les trames provenant du réseau RN qui sont stockées dans ses mémoires internes, lorsque ces dernières sont sur le point d'être saturées.

Le contrôleur CMS gère les priorités d'accès au bus haut débit BDF, suivant le niveau de priorité qui a été indiqué plus haut, le degré le plus haut de priorité étant le chemin réseau RN - mémoire de stockage MST. Par ailleurs, le contrôleur CMS organise le transfert des caractères de commande fabriqués par le microprocesseur MP, via le bus BC, le contrôleur CCD et le bus haut débit BDF dans la mémoire de stockage MST. Cette transmission des caractères de commande provenant du microprocesseur MP, s'effectue sur instructions spéciales de celui-ci.

Le contrôleur CMS commande l'accès aux différents secteurs de la mémoire de stockage MST. A cet effet, il adresse, par l'intermédiaire du bus d'adresse Ad et de la ligne CS, la mémoire de stockage, ce qui permet de transférer soit les données soit les caractères de commande aux adresses mémoire définies par les bits transmis par le bus d'adresse Ad et la ligne CS. L'adressage de la mémoire de stockage s'effectue en deux temps, à savoir par des informations transitant sur la ligne CS, ce qui permet d'adresser l'un des modules constitutifs de cette mémoire (la mémoire MST est constituée par plusieurs modules identiques d'une capacité déterminée, par exemple 64 kilo octets), dans un premier temps, et dans un second temps , d'adresser un secteur déterminé d'un bloc déterminé par des bits envoyés sur le bus d'adresse Ad. Les ordres d'écriture ou de lecture de la mémoire, sont transmis respectivement sur les lignes WR et RD.

Le contrôleur CMS génère des interruptions que le microprocesseur MP traite : ainsi, par exemple, il détecte l'arrivée des trames, les anomalies qui existent dans la transmission de celles-ci (trames incomplètes, trames comportant des erreurs, etc...). Lors de ces différents évènements, le microprocesseur intervient en effectuant les opérations correspondantes dont la programmation est contenue dans la mémoire EPROM. Le contrôleur CMS est connecté au bus d'adresse BA du microprocesseur MP car chaque adresse qui lui est transmise par le microprocesseur, signifie que telle ou telle opération doit être effectuée sur tel ou tel registre constituant ce contrôleur (l'ensemble des registres constituant le contrôleur, ainsi que les adresses de ceux-ci, les opérations qu'ils sont capables d'effectuer, sont mentionnées dans la notice technique relative à l'élément Am 79c81 mentionnée ci-dessus). Le contrôleur CMS possède six canaux DMA. Deux canaux sont utilisés, l'un pour l'émission, l'autre pour la réception, pour transmettre les informations de l'interface IHA à la mémoire de stockage MST et vice versa, deux autres canaux étant réservés pour transmettre les informations, aussi bien à l'émission qu'à la réception entre le contrôleur de chemins de données CCD et la mémoire de stockage MST, aussi bien dans un sens que dans un autre, et enfin deux canaux pour transmettre des informations du microprocesseur MP à la mémoire de stockage MST en passant par le contrôleur CMS, aussi bien dans un sens que dans un autre. Ces deux derniers canaux DMA du contrôleur CMS sont relativement peu utilisés. Par contre, les quatre premiers le sont en permanence.

La mémoire de stockage MST est une mémoire statique rapide, de très faible temps d'accès, par exemple de 45 nanosecondes. On la divise en deux zones Z₁, Z₂.

La zone Z₁ contient les trames FDDI chaînées qui proviennent du réseau RN. Une partie de la zone Z₂ est préprogrammée et comprend des trames particulières qui sont envoyées sur le réseau RN lorsque des problèmes surviennent sur celui-ci, ce qui est le cas par exemple, si le jeton est perdu, ou si le temps de circulation du jeton est trop élevé. Dans ce cas, il y a réémission de ces trames particulières sur le réseau, dont l'existence et le format sont prévus et définis dans la norme ANSI précitée.

La zone Z₂ contient par ailleurs les trames FDDI formatées et chaînées prêtes pour l'émission sur le réseau RN.

On considère désormais l'interface de données IHAD.

Cette interface est constituée, dans l'exemple de réalisation décrit ici, par deux ensembles de quatre mémoires de type FiFo (First in, First out) de relativement grande taille, l'un pour l'émission, l'autre pour la réception. Chacune des quatres mémoires FiFo d'un ensemble peut contenir 2048 groupements de 9 bits. Ces quatre FiFo sont montées en parallèle de telle sorte que par exemple, à l'émission, la première d'entre elles reçoive les bits HD₀ à HD₈, la seconde les bits HD₉ à HD₁₇, la troisième les bits HD₁₈ à HD₂₆ et la quatrième les bits HD₂₇ à HD₃₁ ainsi que les 4 bits de parité HDP₀ à HDP₃. Un montage analogue est pratiqué pour les quatre FiFo en réception.

Du côté du dispositif adaptateur, les bits de sortie pour chacune des mémoires FiFo sont les suivants : DB₀ à DB₈ pour la première mémoire, DB₉ à DB₁₇ pour la seconde, DB₁₈ à DB₂₆ pour la troisième, DB₂₇ à DB₃₁ et les quatre bits de parité DBP₀ à DBP₃ pour la quatrième. Il convient de noter que les quatre mémoires sont, dans l'exemple de réalisation décrit ici, réalisées sous forme de boîtiers du type 67c4503-50 de la firme AMD. Tous ces différents boîtiers sont compatibles en vitesse. Du fait que chacun d'entre eux peut contenir 2048 octets, on voit que l'interface IHAD pourra contenir aisément la totalité d'une trame FDDI, soit 4500 octets. Ces boîtiers possèdent, par construction, des compteurs internes qui déterminent l'état de remplissage des mémoires FiFo. Lorsque la mémoire FiFo est vide, son compteur associé émet un signal (appelé flag en anglais) que nous désignons par EF. Lorsque la mémoire FiFo est à demi pleine, le signal émis par le compteur est désigné par HF. Lorsque la mémoire FiFo est pleine, le signal émis est désigné par FF. Ces trois signaux servent à réguler les transferts d'informations entre le module hôte HIO et le dispositif adaptateur DEA, sachant que toute opération d'écriture de la mémoire de stockage MST correspond à une opération de lecture des mémoires FiFo de l'interface IHAD, alors que la lecture de cette même mémoire de stockage correspond à l'écriture des mémoires FiFo.

On examine tout d'abord l'opération de lecture de la mémoire de stockage MST.

La logique de commande du canal DMA du contrôleur CMS est contrôlée par les signaux FF et HF.

Si le contenu des mémoires FiFo est inférieur ou égal à HF (mémoire FiFo à moitié pleine), l'écriture de celles-ci s'effectue en y accédant en mode rafale. Si le contenu de la mémoire FiFo est comprise entre FF et HF, l'écriture de la mémoire FiFo s'effectue par accès suivant le mode dit vol de cycle (l'accès en mode vol de cycle est deux fois moins rapide que l'accès en mode rafale).

Si le contenu de la FiFo est égal à FF, on cesse alors les opérations de transfert DMA sous le contrôle du contrôleur CMS.

Dans ce dernier cas, dès que le module hôte HIO a effectué des lectures de la mémoire FiFo, celle-ci étant désormais en partie vide, le canal DMA de CMS se remet automatiquement en service jusqu'à la fin d'exécution du transfert demandé (transfert complet d'une ou plusieurs trames successives).

On considère maintenant l'opération d'écriture de la mémoire de stockage MST.

La logique de commande du DMA est alors contrôlée par les signaux EF et HF.

Si le contenu de la mémoire FiFo est inférieur ou égal à HF, la lecture de la FiFo a lieu et l'accès à la mémoire MST s'effectue en mode vol de cycle. Si le contenu de la mémoire FiFo est supérieur à HF, on lit la mémoire FiFo et on accède à la mémoire de stockage selon le mode rafale. Si enfin le contenu de la mémoire FiFo est égal à EF, on arrête le transfert DMA. Dès que le contenu de la mémoire FiFo redevient inférieur à EF, le transfert DMA reprend jusqu'à la fin d'exécution du transfert demandé.

On considère désormais l'interface de commande IHAC.

Cette interface est réalisée à l'aide de mémoires FiFo bidirectionnelles qui permettent donc le transfert des différents paramètres nécessaires à la constitution des caractères de commandes des trames FDDI, aussi bien dans le sens de l'émission que dans le sens de la réception.

Dans l'exemple de réalisation décrit ici, l'interface IHAC comprend deux boîtiers "bi-FiFo", de type 67c4701 de la Société AMD.

Chaque boîtier bi-FiFo comprend notamment deux mémoires bi-FiFo de 512 groupements de 9 bits (1 octet plus 1 bit de parité). Ces deux boîtiers bi-FiFo sont désignés respectivement par BF₁ et BF₂. Lorsque le premier microprocesseur PROC veut écrire dans les deux mémoires bi-FiFo, il envoie un signal W₁ à chacune de celles-ci, auquel correspond un signal de lecture R₃ envoyé par le second microprocesseur MP lorsque ce dernier veut lire ce qui a été écrit par le premier.

Réciproquement lorsque le second microprocesseur MP veut écrire dans les deux mémoires bi-FiFo, il envoie un signal W₂ à chacune d'elles, auquel correspond un signal de lecture R₄ envoyé par le premier microprocesseur PROC lorsque ce dernier veut lire ce qui a été écrit par le second.

Chaque boîtier bi-FiFo dispose de deux ports, à savoir P₁ et P₂ pour le boîtier BF₁ et P₃ et P₄ pour le boîtier BF₂. On rappelle qu'un port constitue une porte d'entrée ou une porte de sortie d'un bus sur le boîtier considéré. Ainsi, les ports P₁ et P₃ sont les portes d'entrée du bus BH, alors que les ports P₂ et P₄ sont les portes d'entrée du bus de commande BC.

Chaque port est associé à une boîte à lettres. Ainsi, les ports P₁ à P₄ sont respectivement associés aux boîtes à lettre BL₁ à BL₄.

Du point de vue fonctionnel, on peut considérer que les deux ports P₁ et P₃ d'une part, et P₂ et P₄ d'autre part, constituent une seule et même entité que l'on désigne respectivement par P₁₃ et P₂₄. Il en est de même pour les boîtes à lettres associées qui sont alors désignées respectivement par BL₁₃ et BL₂₄. On peut dire que, du point de vue fonctionnel, chaque boîte à lettres est associée soit au module hôte et plus précisément à son microprocesseur PROC (boîte BL₁₃) soit au contrôleur de gestion CGT et plus précisément au microprocesseur MP (boîte BL₂₄).

Le premier microprocesseur PROC peut écrire ou lire dans sa boîte à lettres associée BL₁₃. Celle-ci est donc écrite ou lue sur instruction de ce dernier. Elle peut être également lue sur instruction du second microprocesseur MP.

De même, le second microprocesseur MP peut écrire ou lire dans sa boîte à lettres associée BL₂₄. Celle-ci est donc écrite ou lue sur instruction de celui-ci. Elle peut également être lue sur instruction du premier microprocesseur PROC.

Lorsque le système hôte écrit dans sa boîte à lettres BL₁₃, l'interface IHAC émet vers le microprocesseur MP un signal d'interruption dénommé IRQ-A vers ce dernier. De même, lorsque le microprocesseur MP écrit dans la boîte à lettres du DEA (BL₂₄), l'interface IHAC émet une interruption dénommée IRQ-B vers le microprocesseur PROC du module hôte. Les interruptions IRQ-A et IRQ-B regroupent respectivement toutes les interruptions venant du module hôte et toutes les interruptions venant du microprocesseurs MP.

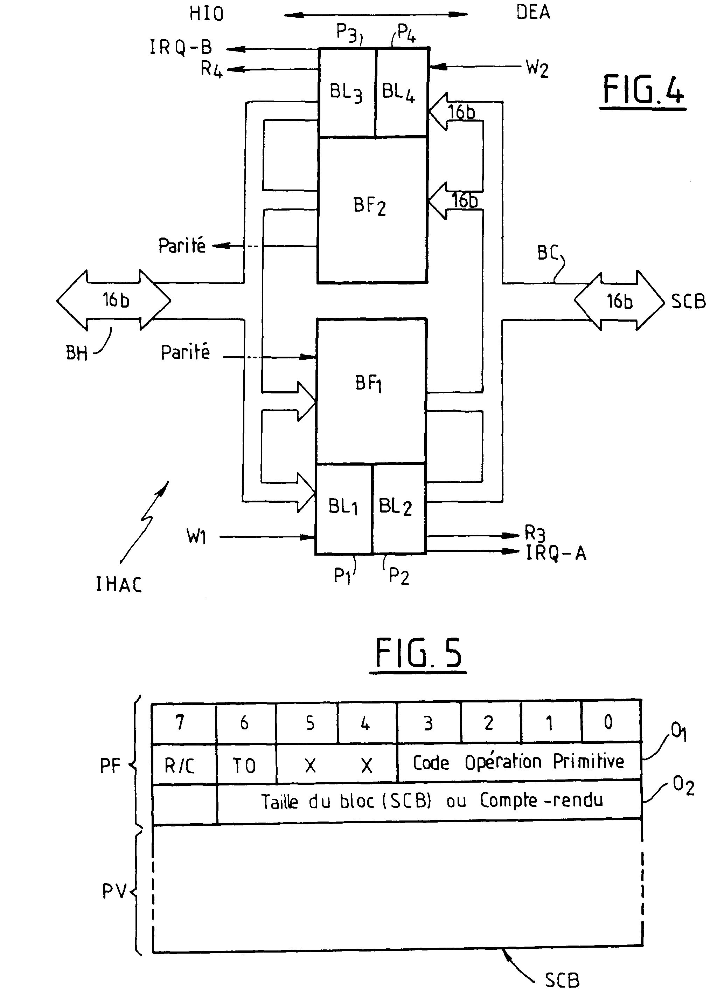

On considère la figure 5 qui montre comment est constitué le bloc de contrôle SCB. Celui-ci comprend une partie fixe PF et une partie variable PV, dont la longueur est fonction de chaque opération accomplie soit par le dispositif adaptateur DEA, soit par le module hôte HIO.

La partie fixe comprend 2 octets désignés respectivement par 0₁ et 0₂. Le premier octet 0₁ désigne sur ses 4 bits de poids le plus faible, le code de l'opération à accomplir, alors que les 2 bits de rang 4 et 5 permettent de désigner une sous famille à l'intérieur de certaines opérations bien déterminées dont la désignation est effectuée sur les 4 bits de poids le plus faible. Le bit de rang 7 désigné par R/C, ce qui signifie réponse/commande, indique si la requête qui est effectuée est une commande lorsque le bit est égal à 0 ou une réponse lorsque le bit est égal à 1.

Quant au bit de rang 6, il est prévu pour être utilisé dans le cas où le dispositif adaptateur est disposé à l'intérieur d'une station ou terminal quelconque autre que l'ordinateur ORD, tel qu'un terminal à écran, et où il faut transmettre un certain nombre d'informations à cette station (pour visualiser des résultats de statistiques, l'arrivée de trames, ...). Si le bit est égal à zéro, il n'y a pas de transfert d'informations vers la station (il s'agit alors uniquement de transférer des informations du DEA vers l'hôte ou vice versa). S'il est égal à un, on peut transférer des informations vers la station (tout en continuant le transfert de données du DEA vers l'hôte ou réciproquement).

L'octet O₂ indique la taille du bloc de contrôle SCB si la requête est une commande et le compte rendu si la requête est une réponse (compte rendu effectué par l'un des deux microprocesseurs PROC et MP, en réponse à la commande effectuée par l'autre de ces mêmes microprocesseurs, ce compte rendu indiquant s'il est possible d'effectuer l'opération demandée par le premier d'entre eux). Toutefois, comme le mode de communication entre les deux microprocesseurs par commande/réponse est très long (il faut acquitter une commande en envoyant une réponse, avant de mettre en oeuvre l'opération), on préfère agir de telle sorte que le second microprocesseur n'envoie pas de réponse à la commande de l'hôte et effectue de toute façon l'opération correspondant à cette commande.

La partie variable comprend par exemple les informations nécessaires à la constitution des trames FDDI, c'est-à-dire les caractères de commande de celles-ci, ou toutes autres informations nécessaires pour mettre en oeuvre l'une des opérations que peut effectuer le dispositif adaptateur DEA sous le contrôle du contrôleur CGT.

Il est clair que le premier octet O₁ de la partie fixe PF est transmis sur le premier boîtier BF₁ alors que le second octet O₂ est transmis simultanément sur le boîtier BF₂. La répartition des octets sur les deux boîtiers étant analogue pour les octets de la partie PV.

La partie variable PV du bloc de contrôle SCB est chargée dans la mémoire bi-FiFo de chaque boîtier alors que la partie fixe PF est chargée dans la boîte à lettres. Le mode de transfert est le suivant :

Lorsqu'une interruption IRQ-A ou IRQ-B est générée, on vérifie d'abord que celle-ci n'est pas due à une erreur de parité. On acquitte l'interruption sauf si elle est générée par la boîte à lettres.

S'il n'y a pas d'erreur de parité, la lecture de la boîte à lettres qui contient la partie fixe du bloc de contrôle SCB acquitte automatiquement l'interruption et le transfert de la partie fixe et de la partie variable du bloc de commande peut avoir lieu soit vers le module hôte HIO, soit vers le microprocesseur MP.

L'utilisation de boîtiers bi-FiFo permet de chaîner les uns derrière les autres des blocs de contrôle SCB, et ainsi de gérer, à partir de l'un ou l'autre des deux microprocesseurs PROC et MP des files d'attente de blocs de contrôle. Il est donc possible de transférer plusieurs blocs de contrôle SCB, alors qu'on transfère les données correspondant à un seul.

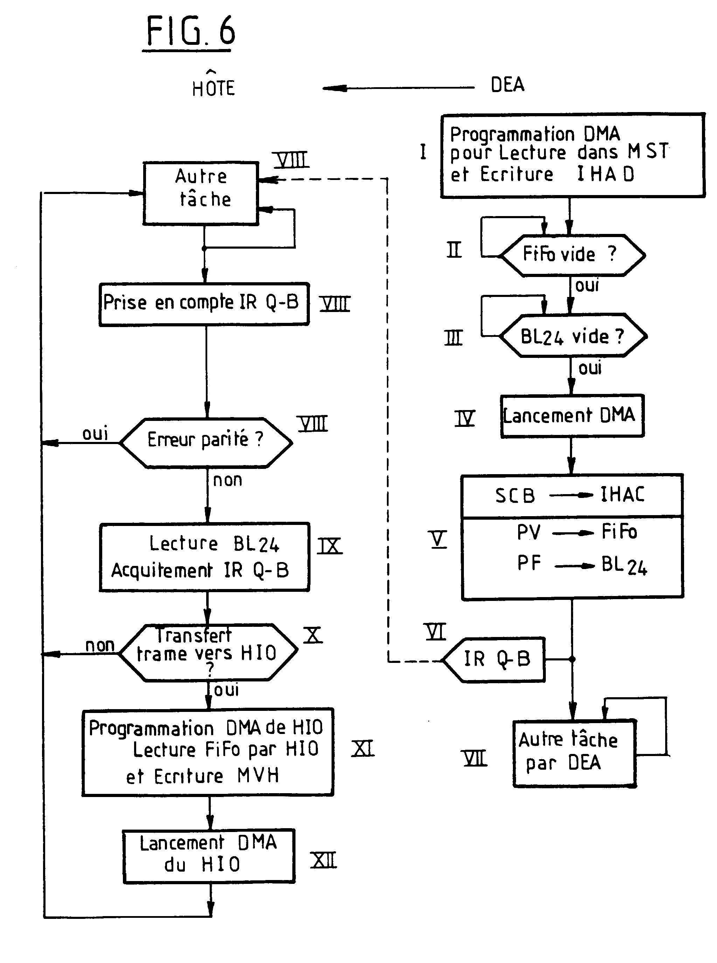

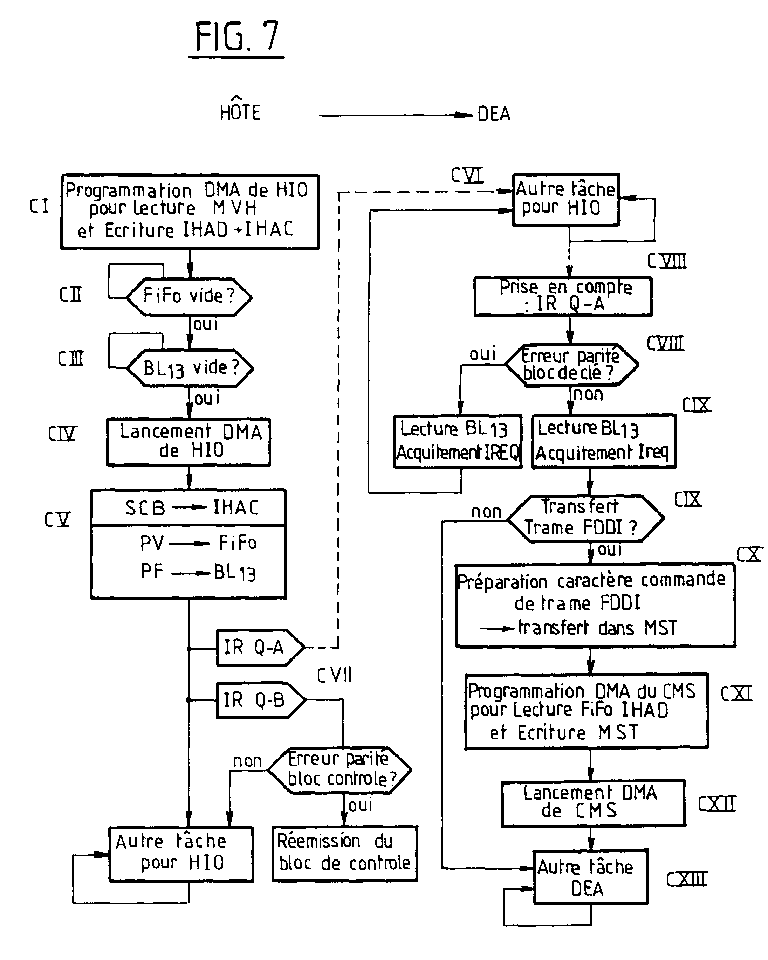

Le détail du fonctionnement du dispositif DPC selon l'invention apparaîtra au regard des figures 6 et 7 qui montrent respectivement les différentes opérations effectuées par le programme de transfert contenu dans la mémoire EPROM du contrôleur CGT, lorsqu'il s'agit du transfert du dispositif adaptateur DEA vers le module hôte HIO, ou dans la mémoire MMP du module HIO, s'il s'agit du transfert du module hôte vers le dispositif adaptateur.

On considère tout d'abord la figure 6. Le programme de transfert comprend douze opérations successives, numérotées de I à XII en chiffres romains. Ces opérations sont les suivantes :

Opération I : une trame FDDI arrive en provenance du réseau RN. Après avoir été mise en forme, décodée, transférée en parallèle sur 8 bits par l'élément FORMAC, puis mise sur 32 bits par le contrôleur de chemin de données CCD, cette trame, arrive dans la mémoire de stockage MST. Le microprocesseur, averti par le contrôleur CMS qu'une trame est arrivée dans la mémoire de stockage, va lire dans celle-ci les caractères de commande qui sont situés en tête (taille de la trame en octets, adresse source, adresse destination, etc...) et constituer à partir de ces éléments le bloc de commande SCB, en vue de son transfert vers le module hôte HIO. Il programme alors le DMA du contrôleur CMS en indiquant l'adresse de départ du bloc à transférer dans la mémoire de stockage, la taille du bloc à transférer.

Opération II : le contrôleur CMS vérifie d'abord si les mémoires FiFo de l'interface IHAD sont vides. Si elles ne le sont pas, on réitère l'opération jusqu'à ce qu'elles le soient.

Si les mémoires FiFo de l'interface IHAD sont vides, on passe à l'opération III.

Opération III : on vérifie, de la même manière que dans l'opération II, si la boîte à lettres BL₂₄ est vide. Si elle l'est, on passe alors à l'opération IV.

Opération IV : le contrôleur CMS lance son DMA, c'est-à-dire lance le transfert des données depuis la mémoire de stockage MST dans les mémoires FiFo de l'interface IHAD. Le microprocesseur MP est alors libre et peut effectuer pendant ce temps une autre opération, et le DMA du contrôleur CMS agit seul. Simultanément à l'opération IV s'effectue l'opération V.

Opération V : simultanément à l'opération IV, le microprocesseur MP charge le bloc de contrôle SCB dans les deux mémoires bi-FiFo, BF₁ et BF₂, la partie fixe étant chargée dans la boîte à lettres BL₂₄, alors que la partie variable qui contient les paramètres définissant l'opération à accomplir, sont transférées dans les mémoires bi-FiFo proprement dites. On passe alors à l'opération VI.

Opération VI : l'écriture de la partie fixe PF du bloc de contrôle SCB génère alors l'interruption IRQ-B. Cette opération est automatique et interne à la mémoire bi-FiFo, par construction. On va alors effectuer simultanément les opérations VII et VIII.

Opération VII : pendant ce temps, une autre tâche (une autre opération) est effectuée par le dispositif adaptateur sous le contrôle du contrôleur CGT (travail de statistiques, maintenance du dispositif adaptateur, constitution des caractères de commande d'une trame pour l'émission, traitement d'une trame nouvelle qui arrive en réception, et si rien n'est à faire, travail de surveillance).

Opération VIII : le module hôte HIO qui était en train d'effectuer une tâche quelconque, interrompt celle-ci en cours d'exécution, et prend en compte l'interruption IRQ-B qui lui a été envoyée par l'interface IHAC. Le microprocesseur PROC vérifie s'il ne s'agit pas d'une erreur de parité survenue lors du transfert. S'il s'agit d'une erreur, on retourne à l'opération VIII et pendant ce temps, le module HIO reprend l'exécution de la tâche qu'il a interrompue. S'il n'y a pas d'erreur de parité, on passe à l'opération IX.

Opération IX : on lit la boîte à lettres BL₂₄, et l'interruption IRQ-B est acquittée. Cela signifie que le module hôte peut effectivement accomplir le transfert des informations depuis l'interface HIA. On passe alors à l'opération X.

Opération X : on vérifie si l'opération à accomplir est une demande de transfert de données entre le dispositif adaptateur DEA et le module hôte HIO. Si ce n'est pas le cas, le module hôte accomplit une autre tâche, par exemple celle qu'il a interrompue. Par contre, en cas de réponse positive, on passe à l'opération XI.

Opération XI : le processeur PROC programme alors son contrôleur CUA. On passe à l'opération XII.

Opération XII : le microprocesseur PROC lance son propre DMA. Si l'opération de transfert des données depuis l'interface IHA vers la mémoire vive MVH du module HIO est une tâche prioritaire pour le microprocesseur, elle est alors exécutée par le module note. Si ce dernier a une tâche plus prioritaire, son propre DMA est interrompu pendant l'exécution de cette tâche jusqu'à ce que celle-ci soit terminée, le DMA reprenant alors l'exécution du transfert de données au point où il avait été interrompu.

On considère maintenant la figure 7 qui permet de mieux comprendre le détail du fonctionnement du transfert des informations depuis le module nôte jusqu'au dispositif adaptateur. Ce programme est contenu dans la mémoire MMP du module hôte. Ce programme comporte essentiellement treize grandes opérations numérotées de CI à CXIII en chiffres romains.

Opération CI: le microprocesseur PROC programme son DMA (lecture de la mémoire MVH, écriture des mémoires FiFo de l'interface IHA). Il indique l'adresse de départ dans sa mémoire, et la taille du bloc à transférer. On passe à l'opération CII.

Opération CII : le microprocesseur PROC vérifie si les mémoires FiFo de l'interface IHAD sont vides. Si elles ne le sont pas, on réitère l'opération. Si elles le sont, on passe à l'opération CIII.

Opération CIII : le microprocesseur regarde si la boîte à lettres BL₁₃ de l'interface IHAC est vide d'une manière analogue à l'opération CII. Si la réponse est positive, on passe simultanément aux opérations CIV et CV.

Opération CIV : le microprocesseur PROC lance le DMA, c'est-à-dire transfère les données dans l'interface IHAD.

Opération CV : le bloc de contrôle SCB est chargé dans les mémoires bi-FiFo de l'interface IHAC. L'écriture de la boîte à lettres BL₁₃ génère une interruption, à savoir soit IRQ-A, soit IRQ-B. Dans le premier cas, on passe à l'opération CVI. Dans le second cas, on passe à l'opération CVII.

Opération CVI : l'interruption IRQ-A est envoyée au microprocesseur MP du dispositif adaptateur DEA. Pendant ce temps, le module hôte peut effectuer une autre tâche.

Opération CVII : si lors du chargement du bloc de commande dans l'interface IHAC, il y a une erreur de parité, l'interruption IRQ-B est renvoyée vers le module hôte, ce qui signifie : le bloc de contrôle qui a été cnargé n'est pas correct : il faut le réécrire. Il y alors réémission du bloc de contrôle par le processeur PROC.

Opération CVIII : le microprocesseur MP prend en compte l'interruption IRQ-A et regarde à nouveau s'il y a une erreur de parité dans le bloc de commande SCB qui lui est transmis. S'il n'y a pas d'erreur de parité, on passe à l'opération CIX. S'il y a une erreur de parité, on acquitte l'interruption IRQ-A et le microprocesseur MP peut retourner à une autre tâche.

Opération CIX : on regarde quelle est l'opération à effectuer. Si cette opération n'est pas un transfert de données vers la mémoire de stockage, le microprocesseur MP passe à une autre tâche (Opération CXIII). Si cette opération est un transfert de données vers la mémoires de stockage, on passe à l'opération CX.

Opération CX : le microprocesseur MP prépare les caractères de commande de tête et de fin de la trame FDDI qu'il s'agit de construire. Quand ce travail est effectué, on passe à l'opération CXI.

Opération CXI : le microprocesseur MP programme le DMA du contrôleur CMS. Une fois ceci effectué, on passe à l'opération CXII.

Opération CXII : le microprocesseur MP lance le DMA du contrôleur CMS : on lit les données contenues dans les mémoires FiFo de l'interface IHA et on écrit dans la mémoire de stockage MST. Pendant ce temps, le microprocesseur MP est libre et on passe à l'opération CXIII.

Opération CXIII : le microprocesseur MP effectue une autre tâche : cette tâche peut être recevoir une autre trame provenant du réseau RN : en effet, dans la mémoire de stockage, il peut y avoir transfert de trames provenant soit du réseau, soit du module hôte. En effet, les deux canaux DMA du contrôleur CMS, à l'émission et à la réception, peuvent se partager le bus haut débit BDF, ce bus ayant un débit double du débit de l'anneau constituant le réseau RN.

## Revendications

1. Dispositif passerelle de connexion (DPC) d'un bus d'ordinateur (PSB) à un réseau fibre optique en forme d'anneau (RN,AP-AS) à très haut débit, comprenant un module hôte d'entrée/sortie (HIO), une interface de transfert de données et de blocs de contrôle dite "interface de transfert", et un dispositif adaptateur (DEA) :
- le module hôte (HIO) étant connecté au bus d'ordinateur (PSB) et comportant au moins un bus de communication (BH) qui est relié à un premier microprocesseur (PROC) et qui transporte à la fois des données et des blocs de contrôles (SCB) contenant des paramètres relatifs à la constitution des trames et à la nature des opérations à effectuer par le dispositif passerelle (DPC), le premier microprocesseur (PROC) commandant la transmission des trames du bus d'ordinateur vers l'interface de transfert (IHA) et réciproquement,
- L'interface de transfert (IHA) étant connectée au bus de communication (BH) et au dispositif adaptateur (DEA) lui-même connecté au réseau par l'intermédiaire d'un dispositif d'accès physique au réseau (DAPR) relié physiquement à celui-ci, cette interface assurant le transfert des données et des blocs de contrôles entre le module hôte et le dispositif adaptateur et réciproquement,
- Le dispositif adaptateur (DEA) incluant un bus haute vitesse (BDF), une mémoire de stockage (MST), un contrôleur d'accès au réseau (CAR), le bus haute vitesse étant respectivement connecté à l'interface de transfert (IHA), au contrôleur d'accès au réseau (CAR), et à la mémoire de stockage laquelle est également reliée au contrôleur d'accès au réseau et au dispositif d'accès physique au réseau (DAPR),
caractérisé en ce que le dispositif adaptateur (DEA) comprend, en outre :
- Un contrôleur de gestion de transfert des trames (CGT) entre le module hôte (HIO) et le réseau (RN), comprenant un bus de commande (BC) connecté à l'interface de transfert et au contrôleur d'accès au réseau (CAR), ce bus de commande véhiculant les blocs de contrôle (SCB) venant de ou allant vers le module hôte ainsi que les caractères de commande des trames venant de ou allant vers la mémoire de stockage (MST) à travers le contrôleur d'accès au réseau (CAR), le contrôleur de gestion interprétant les blocs de contrôle pour constituer les caractères de commande et vice-versa, aussi bien pour la transmission des trames vers le réseau que pour la réception de trames provenant de celui-ci, le contrôleur de gestion (CGT) gérant le transfert des trames de données entre l'interface de transfert (IHA) et le réseau et vice-versa à travers successivement le bus haute vitesse (BDF), la mémoire de stockage (MST), et le contrôleur d'accès au réseau et vice-versa, le transfert des données et des blocs de contrôle (SCB) correspondant aux différentes trames qui se succèdent, respectivement sur le bus haute vitesse (BDF) et le bus de commande (BC), s'effectuant indépendamment sur l'un et sur l'autre.

2. Dispositif selon la revendication 1, caractérisé en ce que le réseau (RN) étant de type FDDI, tout bloc de contrôle (SCB) comprend une partie fixe (PF) ayant un nombre d'octets déterminé, identique d'un bloc à l'autre, définissant la nature de l'opération que doit effectuer le dispositif de connexion (DPC) sous le contrôle du contrôleur de gestion (CGT), et une partie variable (PV) dont le nombre d'octets dépend de la nature de l'opération.

3. Dispositif selon la revendication 2 caractérisé en ce que la partie variable (PV) contient les différents paramètres relatifs à la constitution de trames FDDl quand l'opération à effectuer consiste à transmettre de telles trames depuis ou vers le réseau (RN).

4. Dispositif selon la revendication 2, caractérisé en ce que le contrôleur de gestion de transfert (CGT) est construit autour d'un second microprocesseur (MP), le premier et le second microprocesseur dialoguant entre eux en échangeant les blocs de contrôle SCd par l'intermédiaire du bus de communication (BH), de l'interface (IHA) et du bus de commande (BC).

5. Dispositif selon la revendication 4, caractérisé en ce que l'interface de transfert (IHA) comprend une première interface (IHAD) pour transférer les derniers vers ou depuis le bus haut débit (BDF) et une seconde interface (IHAC) pour le transfert des blocs de contrôle (SCB) entre les premier et second microprocesseur( PROC, NP), laquelle permet ainsi le dialogue entre eux.

6. Dispositif selon la revendication 5, caractérisé en ce que la seconde interface (IHAC) comprend du côté du port d'entrée (P₁₃) correspondant au module note (HlO) une première boite à lettres (BL₁₃), et du côté du second port d'entrée (P₂₄) correspondant au contrôleur de gestion (CGT) une seconde boîte à lettres (BL₂₄), les boîtes à lettres contenant la partie fixe des blocs de contrôle (SCB), la partie variable étant contenue dans la partie de l'interface (IHAC) de commande ne contenant pas les boites à lettres, chaque port d'entrée pouvant lire ou écrire dans sa propre boite à lettres, et lire dans la boîte à lettres de l'autre.

7. Dispositif selon la revendication 6, caractérisé en ce que l'interface de commande (IHAC) est formée par au moins une mémoire bi-FiFo bidirectionnelle et une boîte à lettres (BL₁) correspondant au module hôte (HIO) et une seconde boite à lettres correspondant au contrôleur de gestion (CGT).

8. Dispositif selon les revendications 5, 6, 7, caractérisé en ce que la première interface est formée par au moins une mémoire Fifo bidirectionnelle.

9. Dispositif selon la revendication 4, caractérisé en ce que le contrôleur d'accès au réseau (CAR) sélectionne et contrôle l'accès au bus haut débit (BDF) et à la mémoire de stockage (MST) suivant trois accès qui sont, un premier accès à la mémoire (MST) depuis le réseau (RN) et vice-versa, un second accès à la mémoire (MST) depuis l'interface de transfert (IHA) et vice-versa, et un troisième accès à la mémoire (MST) depuis le second microprocesseur via le contrôleur d'accès (CAR) pour l'échange de caractères de commande des trames FDDI, le premier accès ayant la priorité la plus élevée, et le second la plus basse.

10. Dispositif selon la revendication 9, caractérisé en ce que le contrôleur d'accès (CAR) comprend un contrôleur de chemin de données (CCD) connecté au bus de commande (BC) et au dispositif d'adaptateur physique (DAPR), et un bus haut débit (BDF), un contrôleur (CMS) de la mémoire statique, connecté au bus de commande (BC), au bus haut débit (BDF) et à la mémoire statique, le contrôleur de chemin de données (CCD) sélectionnant les chemins d'accès correspondant au trois types d'accès précités, le contrôleur de mémoire statique, arbitrant la prise du bus haut débit pour ces différents accès et gérant le transfert soit des données, soit des caractères de commande vers ou depuis la mémoire statique par le bus naut débit, suivant le type d'accès sélectionné, les deux contrôleurs (CCD) et (CMS) étant reliés entre eux.

11. Dispositif selon la revendication 4, caractérisé en ce que le contrôleur de gestion de transfert (CGT) comprend un compteur de la taille des trames (FDDI) passant sur le bus haut débit (BDF), connecté au bus de commande (BC) et adressé par le microprocesseur (MP).

12. Dispositif selon la revendication 4, caractérisé en ce que le contrôleur de gestion (CGT) comprend un circuit d'norloge pour effectuer des statistiques sur les événements se produisant sur le réseau (RN), connecté au bus de commande (BC) et adressé par le second microprocesseur (MP).

13. Procédé de mise en oeuvre du dispositif passerelle selon la revendication 6, consistant à transférer les informations du dispositif adaptateur (DEA) vers le module hôte (HIO), caractérisé en ce que,
1/ Lorsqu'une trame (FDDI) arrive dans la mémoire de stockage, le second microprocesseur constitue le bloc de contrôle SCB correspondant et programme le contrôleur d'acces (CAR) pour préparer le transfert des données,
2/ Il vérifie si l'interface de données est vide et si la seconde boîte à lettres (BL₂₄) est vide.
3/ Si cela est vérifié, le contrôleur d'accès (CAR) lance le transfert des données dans l'interface de données (IHAD) et le second microprocesseur charge le bloc de contrôle dans l'interface de commande (IHAC), ce qui génère une interruption IRQ-B vers le premier microprocesseur (PROC),
4/ Simultanément à 3/, le DEA accomplit une autre opération, et le premier microprocesseur acquitte l'interruption et vérifie s'il n'y a pas eu d'erreur de parité dans le transfert des données dans l'interface (IHAD),
5/ Le premier microprocesseur acquitte l'interruption IRQ-B et vérifie si l'opération à accomplir est un transfert de données vers le bus d'ordinateur,
6/ Si cela est le cas, il prépare le transfert des données depuis l'interface de données (IHAD), vers la mémoire (MNH) qui lui est associée,
7/ Il lance le transfert des données vers sa mémoire associée (MVH).

14. Procédé de mise en oeuvre du dispositif passerelle selon la revendication 6, consistant à transférer les informations du module hôte (HIO) vers le dispositif adaptateur( DEA), caractérisé en ce que :
1/ Lorsqu'une trame d'informations est a envoyer sur le réseau, le premier microprocesseur programme le transfert vers l'interface de transfert (IHA), et constitue le bloc de contrôle SCB,
2/ Il vérifie si l'interface de données (IHAD) et la première boîte à lettres sont vides,
3/ Si cela est vérifié, il transfère les données dans l'interface de données (IHAD) et le bloc de contrôle dans la première boîte à lettres (BL₁₃) ce qui génère une interruption IRQ-A vers le second microprocesseur (MP) ou une interruption IRQ-B vers le premier s'il y a erreur de parité : dans ce cas, il y a réémission du bloc de contrôle. Sinon, on passe en 4/,
4/ IRQ-A provoque une interruption du second microprocesseur,
5/ Ce dernier regarde si l'opération à accomplir est un transfert de trame (FDDI) vers le réseau (RN),
6/ Si cela est le cas, il prépare les caractères de commande, envoie ceux-ci dans la mémoire de stockage (MST) et programme le contrôleur d'accès (CAR),
7/ Ce dernier lance le transfert par lecture de l'interface (IHAD) et écriture de la mémmoire de stockage (MST) avant transfert de la trame vers le réseau (RN).

## Patentansprüche

1. Brückenanordnung (DPC) für den Anschluß eines Rechnerbusses (PSB) an ein Lichtleitfaser-Ringnetz (RN,AP-AS) mit sehr hohem Durchsatz, mit einem Eingangs/Ausgangs-Hostmodul (HIO), einer Daten- und Steuerblock-Übertragungsschnittstelle, die "Übertragungsschnittstelle" genannt wird, und einer Adaptervorrichtung (DEA):
- wobei das Hostmodul (HIO) an den Rechnerbus (PSB) angeschlossen ist und wenigstens einen Kommunikationsbus (BH) enthält, der an einen ersten Mikroprozessor (PROC) angeschlossen ist und zugleich Daten und Steuerblöcke (SCB) transportiert, die auf die Bildung der Rahmen und auf die Art der von der Brückenanordnung (DPC) auszuführenden Operationen bezogene Parameter enthalten, wobei der erste Mikroprozessor (PROC) das Senden der Rahmen vom Rechnerbus zur Übertragungsschnittstelle (IHA) und umgekehrt steuert,
- wobei die Übertragungsschnittstelle (IHA) an den Kommunikationsbus (BH) und an die Adaptervorrichtung (DEA) angeschlossen ist, die ihrerseits an das Netz über eine Vorrichtung für den physischen Zugriff auf das Netz (DAPR), die mit diesem physisch verbunden ist, angeschlossen ist, wobei diese Schnittstelle die Übertragung von Daten und Steuerblöcken zwischen dem Hostmodul und der Adaptervorrichtung und umgekehrt gewährleistet,
- wobei die Adaptervorrichtung (DEA) einen Hochgeschwindigkeitsbus (BDF), einen Hinterlegungsspeicher (MST) sowie eine Netzzugriffs-Steuereinrichtung (CAR) enthält, wobei der Hochgeschwindigkeitsbus an die Übertragungsschnittstelle (IHA), an die Netzzugriffs-Steuereinrichtung (CAR) bzw. an den Hinterlegungsspeicher angeschlossen ist, der außerdem mit der Netzzugriffs-Steuereinrichtung und mit der Vorrichtung für den physischen Zugriff auf das Netz (DAPR) verbunden ist,
dadurch gekennzeichnet, daß die Adaptervorrichtung (DEA) außerdem enthält:
- eine Steuereinrichtung für das Management der Übertragung der Rahmen (CGT) zwischen dem Hostmodul (HIO) und dem Netz (RN), mit einem Steuerbus (BC), der an die Übertragungsschnittstelle und an die Netzzugriffs-Steuereinrichtung (CAR) angeschlossen ist, wobei dieser Steuerbus die Steuerblöcke (SCB), die vom Hostmodul kommen oder zu diesem laufen, sowie die Steuerzeichen der Rahmen, die über die Netzzugriffs-Steuereinrichtung (CAR) vom Hinterlegungsspeicher (MST) kommen oder zu diesem laufen, transportiert, wobei die Management-Steuereinrichtung die Steuerblöcke in der Weise interpretiert, daß die Steuerzeichen sowohl zum Senden der Rahmen auf das Netz als auch zum Empfangen der von diesem kommenden Rahmen gebildet werden und umgekehrt, wobei die Management-Steuereinrichtung (CGT) die Übertragung der Datenrahmen zwischen der Übertragungsschnittstelle (IHA) und dem Netz und umgekehrt nacheinander über den Hochgeschwindigkeitsbus (BDF), den Hinterlegungsspeicher (MST) und die Netzzugriffs-Steuereinrichtung und umgekehrt verwaltet, wobei die Übertragungen der Daten und der Steuerblöcke (SCB), die den verschiedenen aufeinanderfolgenden Rahmen entsprechen, über den Hochgeschwindigkeitsbus (BDF) bzw. über den Steuerbus (BC) unabhängig voneinander erfolgen.

2. Anordnung nach Anspruch 1, dadurch gekennzeichnet, daß das Netz (RN) vom FDDI-Typ ist, wobei jeder Steuerblock (SCB) einen festen Teil (PF) mit einer gegebenen Anzahl von Bytes, die von einem Block zum nächsten gleich ist, der die Art der Operation definiert, die die Anschlußanordnung (DPC) unter der Steuerung der Management-Steuereinrichtung (CGT) ausführen soll, sowie einen variablen Teil (PV) enthält, bei dem die Anzahl von Bytes von der Art der Operation abhängt.

3. Anordnung nach Anspruch 2, dadurch gekennzeichnet, daß der variable Teil (PV) die verschiedenen Parameter enthält, die auf die Bildung von FDDI-Rahmen bezogen ist, wenn die auszuführende Operation darin besteht, Rahmen vom Netz (RN) oder auf das Netz (RN) zu senden.

4. Anordnung nach Anspruch 2, dadurch gekennzeichnet, daß die Übertragungsmanagement-Steuereinrichtung (CGT) um einen zweiten Mikroprozessor (NP) konstruiert ist, wobei der erste und der zweite Mikroprozessor miteinander im Dialog stehen, indem sie die Steuerblöcke SCB über den Kommunikationsbus (BH), die Schnittstelle (IHA) und den Steuerbus (BC) austauschen.

5. Anordnung nach Anspruch 4, dadurch gekennzeichnet, daß die Übertragungsschnittstelle (IHA) eine erste Schnittstelle (IHAD) zum Übertragen der Daten zum oder vom Bus mit hohem Durchsatz (BDF) sowie eine zweite Schnittstelle (IHAC) enthält, die der Übertragung der Steuerblöcke (SCB) zwischen dem ersten und dem zweiten Mikroprozessor (PROC, NP) dient und somit den Dialog zwischen ihnen ermöglicht.

6. Anordnung nach Anspruch 5, dadurch gekennzeichnet, daß die zweite Schnittstelle (IHAC) auf seiten des Eingangsanschlusses (P₁₃), der dem Hostmodul (HIO) entspricht, einen ersten Briefkasten (BL₁₃) und auf seiten des zweiten Eingangsanschlusses (P₂₄), der der Management-Steuereinrichtung (CGT) entspricht, einen zweiten Briefkasten (BL₂₄) enthält, wobei die Briefkästen den festen Teil der Steuerblöcke (SCB) enthalten, während der variable Teil in demjenigen Teil der Steuerschnittstelle (IHAC) enthalten ist, der die Briefkästen nicht enthält, wobei jeder Eingangsanschluß in seinem eigenen Briefkasten lesen oder schreiben und im Briefkasten des anderen lesen kann.

7. Anordnung nach Anspruch 6, dadurch gekennzeichnet, daß die Steuerschnittstelle (IHAC) aus wenigstens einem bidirektionalen Bi-FIFO-Speicher und aus einem Briefkasten (BL₁), der dem Hostmodul (HIO) entspricht, sowie aus einem zweiten Briefkasten, der der Management-Steuereinrichtung (CGT) entspricht, gebildet ist.

8. Anordnung nach den Ansprüchen 5, 6, 7, dadurch gekennzeichnet, daß die erste Schnittstelle durch wenigstens einen bidirektionalen FIFO-Speicher gebildet ist.

9. Anordnung nach Anspruch 4, dadurch gekennzeichnet, daß die Netzzugriffs-Steuereinrichtung (CAR) den Zugriff auf den Bus mit hohem Durchsatz (BDF) und den Hinterlegungsspeicher (MST) gemäß dreier Zugriffe auswählt und steuert, welche einen ersten Zugriff auf den Speicher (MST) vom Netz (RN) und umgekehrt, einen zweiten Zugriff auf den Speicher (MST) von der Übertragungsschnittstelle (IHA) und umgekehrt und einen dritten Zugriff auf den Speicher (MST) vom zweiten Mikroprozessor über die Zugriffs-Steuereinrichtung (CAR) für den Austausch von Steuerzeichen der FDDI-Rahmen umfassen, wobei der erste Zugriff die höchste Priorität und der zweite die niedrigste Priorität besitzt.

10. Anordnung nach Anspruch 9, dadurch gekennzeichnet, daß die Zugriffs-Steuereinrichtung (CAR) eine Datenweg-Steuereinrichtung (CCD), die an den Steuerbus (BC) und an die physische Adaptervorrichtung (DAPR) angeschlossen ist, und einen Bus mit hohem Durchsatz (BDF), eine Steuereinrichtung (CMS) des statischen Speichers, die an den Steuerbus (BC), an den Bus mit hohem Durchsatz (BDF) und an den statischen Speicher angeschlossen ist, enthält, wobei die Datenweg-Steuereinrichtung (CCD) die Zugriffswege auswählt, die den drei obengenannten Zugriffstypen entsprechen, wobei die Steuereinrichtung des statischen Speichers die Nutzung des Busses mit hohem Durchsatz für diese verschiedenen Zugriffe bestimmt und die Übertragung entweder der Daten oder der Steuerzeichen zum oder vom statischen Speicher über den Bus mit hohem Durchsatz je nach gewähltem Zugriffstyp verwaltet, wobei die zwei Steuereinrichtungen (CCD) und (CMS) miteinander verbunden sind.

11. Anordnung nach Anspruch 4, dadurch gekennzeichnet, daß die Übertragungsmanagement-Steuereinrichtung (CGT) einen Zähler für die Größe der Rahmen (FDDI), die sich auf dem Bus mit hohem Durchsatz (BDF) bewegen, enthält, der an den Steuerbus (BC) angeschlossen ist und vom Mikroprozessor (MP) angesprochen wird.

12. Anordnung nach Anspruch 4, dadurch gekennzeichnet, daß die Management-Steuereinrichtung (CGT) eine Taktgeberschaltung für die Erstellung von Statistiken bezüglich der auf dem Netz (RN) auftretenden Ereignisse enthält, die an den Steuerbus (BC) angeschlossen ist und vom zweiten Mikroprozessor (MP) angesprochen wird.

13. Verfahren zum Betreiben der Brückenanordnung nach Anspruch 6, das darin besteht, die Informationen der AdapterVorrichtung (DEA) an den Hostmodul (HIO) zu übertragen, dadurch gekennzeichnet, daß
1/ der zweite Mikroprozessor dann, wenn ein Rahmen (FDDI) beim Hinterlegungsspeicher ankommt, den entsprechenden Steuerblock SCB bildet und die Zugriffs-Steuereinrichtung (CAR) in der Weise programmiert, daß die Übertragung von Daten vorbereitet wird,
2/ er verifiziert, ob die Datenschnittstelle leer ist und ob der zweite Briefkasten (BL₂₄) leer ist,
3/ die Zugriffs-Steuereinrichtung (CAR) dann, wenn dies verifiziert ist, die Übertragung der Daten in die Datenschnittstelle (IHAD) beginnt und der zweite Mikroprozessor den Steuerblock in die Steuerschnittstelle (IHAC) lädt, wodurch eine Unterbrechung IRQ-B für den ersten Mikroprozessor (PROC) erzeugt wird,
4/ die DEA gleichzeitig zu 3/ eine andere Operation ausführt und der erste Mikroprozessor die Unterbrechung bestätigt und verifiziert, ob in der Übertragung der Daten in der Schnittstelle (IHAD) kein Paritätsfehler enthalten ist,
5/ der erste Mikroprozessor die Unterbrechung IRQ-B bestätigt und verifiziert, ob die auszuführende Operation eine Übertragung von Daten an den Rechnerbus ist,
6/ er dann, wenn dies der Fall ist, die Übertragung von Daten von der Datenschnittstelle (IHAD) zum Speicher (MNH), der ihm zugeordnet ist, vorbereitet,
7/ er die Übertragung der Daten an seinen zugeordneten Speicher (MVH) beginnt.

14. Verfahren zum Betreiben der Brückenanordnung nach Anspruch 6, das darin besteht, die Informationen des Hostmoduls (HIO) an die Adaptervorrichtung (DEA) zu übertragen, dadurch gekennzeichnet, daß:
1/ der erste Mikroprozessor dann, wenn ein Rahmen von Informationen auf das Netz zu schicken ist, die Übertragung zur Übertragungsschnittstelle (IHA) programmiert und den Steuerblock SCB bildet,
2/ er verifiziert, ob die Datenschnittstelle (IHAD) und der erste Briefkasten leer sind,
3/ er dann, wenn dies verifiziert ist, die Daten in die Datenschnittstelle (IHAD) und den Steuerblock in den ersten Briefkasten (BL₁₃) überträgt, was eine Unterbrechung IRQ-A für den zweiten Mikroprozessor (MP) oder eine Unterbrechung IRQ-B für den ersten erzeugt, falls ein Paritätsfehler vorliegt: in diesem Fall erfolgt eine Wiederaussendung des Steuerblocks, andernfalls wird zu 4/ übergegangen,
4/ IRQ-A eine Unterbrechung des zweiten Mikroprozessors hervorruft,
5/ dieser letztere prüft, ob die auszuführende Operation eine Rahmenübertragung (FDDI-Übertragung) an das Netz (RN) ist,
6/ er dann, wenn dies der Fall ist, die Steuerzeichen vorbereitet, sie in den Hinterlegungsspeicher (MST) sendet und die Zugriffs-Steuereinrichtung (CAR) programmiert,
7/ diese letztere die Übertragung durch Lesen der Schnittstelle (IHAD) und durch Schreiben in den Hinterlegungsspeicher (MST) vor der Übertragung des Rahmens an das Netz (RN) beginnt.

## Claims

1. Bridge device (DPC) for connecting a computer bus (PSB) to a very high-speed optical-fibre ring network (RN, AP-AS), comprising an input-output host module (HIO), an interface for transferring data and control blocks known as a "transfer interface", and an adapter device (DEA):
- the host module (HIO) being connected to the computer bus (PSB) and comprising at least one communication bus (BH) which is connected to a first microprocessor (PROC) and which conveys both data and control blocks (SCB) containing parameters relating to the constitution of frames and to the nature of the operations to be performed by the bridge device (DPC), the first microprocessor (PROC) controlling the transmission of frames from the computer bus to the transfer interface (IHA) and vice versa,
- the transfer interface (IHA) being connected to the communication bus (BH) and to the adapter device (DEA), itself connected to the network via a device giving physical access to the network (DAPR) physically connected thereto, this interface ensuring the transfer of data and control blocks between the host module and the adapter device and vice versa,
- the adapter device (DEA) including a high-speed bus (BDF), a storage memory (MST), a network access controller (CAR), the high-speed bus being connected respectively to the transfer interface (IHA), to the network access controller (CAR), and to the storage memory which is also connected to the network access controller and to the device giving physical access to the network (DAPR),
characterised in that the adapter device (DEA) also comprises:
- a management controller (CGT) for transferring frames between the host module (HIO) and the network (RN), comprising a control bus (BC) connected to the transfer interface and to the network access controller (CAR), this control bus conveying the control blocks (SCB) coming from or going to the host module and also the control characters of the frames coming from or going to the storage memory (MST) via the network access controller (CAR), the management controller interpreting the control blocks in order to constitute the control characters and vice versa, both for the transmission of frames to the network and for the reception of frames coming therefrom, the management controller (CGT) managing the transfer of data frames between the transfer interface (IHA) and the network and vice versa successively over the high-speed bus (BDF), the storage memory (MST) and the network access controller and vice versa, the transfer of data and control blocks (SCB) corresponding to the different frames which succeed each other, respectively over the high-speed bus (BDF) and the control bus (BC), taking place independently on each one.

2. Device according to Claim 1, characterised in that, the network (RN) being of FDDI type, any control block (SCB) comprises a fixed portion (PF) having a determined number of bytes, one block being identical to another, defining the nature of the operation that has to be performed by the connection device (DPC) under the control of the management controller (CGT), and a variable portion (PV), in which the number of bytes depends on the nature of the operation.

3. Device according to Claim 2, characterised in that the variable portion (PV) contains the various parameters relating to the constitution of FDDI frames when the operation to be performed consists in transmitting such frames from or to the network (RN).

4. Device according to Claim 2, characterised in that the transfer management controller (CGT) is constructed around a second microprocessor (MP), the first and second microprocessor engaging in a dialogue with each other and exchanging control blocks (SCB) via the communication bus (BH), the interface (IHA) and the control bus (BC).

5. Device according to Claim 4, characterised in that the transfer interface (IHA) comprises a first interface (IHAD) for transferring the latter to or from the high-speed bus (BDF) and a second interface (IHAC) for transferring control blocks (SCB) between the first and second microprocessors (PROC, NP), which thus allows them to engage in a dialogue.

6. Device according to Claim 5, characterised in that the second interface (IHAC) comprises, on the side of the input port (P₁₃) corresponding to the host module (HIO), a first mailbox (BL₁₃) and, on the side of the second input port (P₂₄) corresponding to the management controller (CGT), a second mailbox (BL₂₄), the mailboxes containing the fixed portion of the control blocks (SCB), the variable portion being contained in the part of the control interface (IHAC) that does not contain the mailboxes, each input port being able to read from or write to its own mailbox, and read from the mailbox of the other one.

7. Device according to Claim 6, characterised in that the control interface (IHAC) is formed by at least one bidirectional bi-FiFo memory and one mailbox (BL) corresponding to the host module (HIO) and a second mailbox corresponding to the management controller (CGT).

8. Device according to Claims 5, 6, 7, characterised in that the first interface is formed by at least one bidirectional FiFo memory.

9. Device according to Claim 4, characterised in that the network access controller (CAR) selects and controls access to the high-speed bus (BDF) and to the storage memory (MST) according to the three accesses which are: a first access to the memory (MST) from the network (RN) and vice versa, a second access to the memory (MST) from the transfer interface (IHA) and vice versa, and a third access to the memory (MST) from the second microprocessor via the access controller (CAR) for exchanging control characters of the FDDI frames, the first access having the highest priority, and the second the lowest.

10. Device according to Claim 9, characterised in that the access controller (CAR) comprises a data path controller (CCD) connected to the control bus (BC) and to the physical adapter device (DAPR), and a high-speed bus (BDF), a controller (CMS) for the static memory, connected to the control bus (BC), the high-speed bus (BDF) and the static memory, the data path controller (CCD) selecting the access paths corresponding to the three aforementioned types of access, the static memory controller arbitrating on the tapping of the high-speed bus for these different accesses and managing the transfer of either data or control characters to or from the static memory via the high-speed bus, depending on the type of access selected, the two controllers (CCD) and (CMS) being connected together.

11. Device according to Claim 4, characterised in that the transfer management controller (CGT) comprises a counter of the size of frames (FFDI) passing over the high-speed bus (BDF), connected to the control bus (BC) and addressed by the microprocessor (MP).

12. Device according to Claim 4, characterised in that the management controller (CGT) comprises a clock circuit for performing statistics on the events occurring on the network (RN) connected to the control bus (BC) and addressed by the second microprocessor (MP).

13. Method for using the bridge device according to Claim 6, consisting in transferring the information from the adapter device (DEA) to the host module (HIO), characterised in that,
1) When a frame (FDDI) arrives in the storage memory, the second microprocessor constitutes the corresponding control block SCB and programmes the access controller (CAR) to prepare to transfer data,
2) It checks whether the data interface is empty and whether the second mailbox (BL₂₄) is empty,
3) If this is verified, the access controller (CAR) launches the transfer of data to the data interface (IHAD) and the second microprocessor loads the control block into the control interface (IHAC), which generates an interrupt IRQ-B towards the first microprocessor (PROC),
4) At the same time as (3), the DEA performs another operation, and the first microprocessor acknowledges the interrupt and checks whether here has been no parity error in the transfer of data to the inter-face (IHAD),
5) The first microprocessor acknowledges the interrupt IRQ-B and checks whether the operation to be performed is a transfer of data to the computer bus,
6) If this is the case, it prepares to transfer the data from the data interface (IHAD) to the memory (MNH) associated therewith,
7) It launches the transfer of data from its associated memory (MVH).

14. Method for using the bridge device according to Claim 6, consisting in transferring the information from the host module (HIO) to the adapter device (DEA), characterised in that:
1) When a frame of information is to be sent over the network, the first microprocessor programmes the transfer to the transfer interface (IHA), and constitutes the control block SCB,
2) It checks whether the data interface (IHAD) and the first mailbox are empty,
3) If this is verified, it transfers the data to the data interface (IHAD) and the control block to the first mailbox (BL₁₃), which generates an interrupt IRQ-A towards the second microprocessor (MP) or an interrupt IRQ-B towards the first one if there is a parity error: in this case, the control block is retransmitted. If not, the next stage is no. (4),
4) IRQ-A causes an interrupt on the second microprocessor,
5) The latter finds out whether the operation to be performed is a transfer of a frame (FDDI) to the network (RN),
6) If that is the case, it prepares the control characters, sends them to the storage memory (MST) and programmes the access controller (CAR).
7) The latter launches the transfer by reading from the interface (IHAD) and writing to the storage memory (MST) before transferring the frame to the network (RN).
